(19) Europäisches Patentamt
European Patent Office
Office européen des brevets

(11) **EP 3 352 404 B1**

(12) **EUROPEAN PATENT SPECIFICATION**

(45) Date of publication and mention
of the grant of the patent:
**23.12.2020 Bulletin 2020/52**

(51) Int Cl.:
*H04L 5/00* *(2006.01)*    *H04L 27/26* *(2006.01)*
*H04W 84/00* *(2009.01)*    *H04L 27/00* *(2006.01)*

(21) Application number: **16846885.8**

(22) Date of filing: **13.09.2016**

(86) International application number:
**PCT/KR2016/010356**

(87) International publication number:
**WO 2017/048064 (23.03.2017 Gazette 2017/12)**

(54) **METHOD FOR CORRECTING FREQUENCY OFFSET IN V2V COMMUNICATION AND DEVICE FOR SAME**

VERFAHREN ZUR FREQUENZVERSATZKORREKTUR IN DER V2V-KOMMUNIKATION UND VORRICHTUNG DAFÜR

PROCÉDÉ DE CORRECTION DE DÉCALAGE DE FRÉQUENCE DANS UNE COMMUNICATION V2V, ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.09.2015   US 201562218550 P**
**22.09.2015   US 201562222156 P**
**29.10.2015   US 201562248294 P**
**01.02.2016   US 201662289372 P**
**01.04.2016   US 201662316573 P**
**10.05.2016   US 201662334442 P**

(43) Date of publication of application:
**25.07.2018 Bulletin 2018/30**

(73) Proprietor: **LG Electronics Inc.**
**Yeongdeungpo-gu**
**Seoul 07336 (KR)**

(72) Inventors:
• **KIM, Youngtae**
**Seoul 06772 (KR)**
• **SEO, Hanbyul**
**Seoul 06772 (KR)**
• **CHAE, Hyukjin**
**Seoul 06772 (KR)**
• **SEO, Inkwon**
**Seoul 06772 (KR)**
• **LEE, Seungmin**
**Seoul 06772 (KR)**

(74) Representative: **Plasseraud IP**
**66, rue de la Chaussée d'Antin**
**75440 Paris Cedex 09 (FR)**

(56) References cited:
**WO-A1-2013/149247        US-A1- 2013 114 756**
**US-A1- 2015 098 369      US-B1- 8 416 759**
**US-B2- 7 813 437         US-B2- 8 446 886**

• **ERICSSON: "Considerations on the LTE V2X Feasibility Study", 3GPP DRAFT; R1-154434 - V2X OVERVIEW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001724, Retrieved from the Internet: URL:http://www.3gpp.org/ftp/Meetings_3GPP_SYNC/RAN1/Docs/ [retrieved on 2015-08-23]**
• **LG ELECTRONICS: "Potential enhancements for PC5-based V2V", 3GPP DRAFT; R1-154290 POTENTIAL ENHANCEMENTS FOR PC5-BASED V2V_LG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Beijing, China; 20150824 - 20150828 23 August 2015 (2015-08-23), XP051001618, Retrieved from the Internet: URL:http://www.3gpp.org/ftp/Meetings_3GPP_SYNC/RAN1/Docs/ [retrieved on 2015-08-23]**

EP 3 352 404 B1

- **HUAWEI ET AL: "DMRS enhancement for V2V", 3GPP DRAFT; R1-153801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 15 August 2015 (2015-08-15), XP050993363, Retrieved from the Internet: URL:http://www.3gpp.org/ftp/tsg_ran/WG1_RL 1/TSGR1_82/Docs/ [retrieved on 2015-08-15]**

**Description**

## TECHNICAL FIELD

The present invention relates to a wireless communication system, and more particularly, to a method for correcting a frequency offset in vehicle-to-vehicle (V2V) communication and apparatus for the same.

## BACKGROUND ART

According to intelligent transportation systems (ITS), many ongoing efforts are made to research and develop methods for exchanging various information such as real-time traffic information and/or safety warning between vehicles. For example, ongoing efforts are made to research and develop vehicle communications for a proximity service (ProSe) and a public warning system. A communication interface for a vehicle can be commonly called V2X (vehicle-to-x). V2X communication may be categorized into V2V (vehicle-to-vehicle) communication, V2P (vehicle-to-pedestrian) communication, and V2I (vehicle-to-infrastructure entity) communication. V2V communication may refer to communication between vehicles. V2P communication may refer to communication between a vehicle and a personally carried device (e.g., a handheld terminal of a pedestrian or a bicycle rider). And, V2I communication may refer to communication between a vehicle and a roadside unit (RSU). RSU may refer to a traffic infrastructure entity. For example, RSU may include an entity that transmits a speed notification. For V2X communication, a vehicle, an RSU and a handheld device may be equipped with a transceiver.

As describe above, V2X communication may be used to indicate warnings for various events such as safety and the like. For example, information on an event occurring on a vehicle or road may be notified to another vehicle or pedestrians through V2X communication. For example, information on a warning of a traffic accident, a road situation change, or an accident danger may be forwarded to another vehicle or pedestrian. For example, a pedestrian, who is adjacent to or crossing a road, can be informed of information on vehicle approach.

U.S. patent application publication No. 2013/114756 A1 discusses a PUSCH reference signal design for high Doppler frequency.

The 3GPP draft No. R1-154434 discusses considerations on the LTE V2X feasibility study.

However, since a vehicle moves at higher speed than a pedestrian, the V2X communication may have relatively low reliability. For example, a phase may be sharply changed due to the Doppler effect. In addition, a channel state may also be changed rapidly due to vehicle movement. Hence, to cope with the rapidly changed channel state, a method capable of achieving high reliability of communication is required.

The present invention is proposed to solve the above-described problems, and particularly, the invention discloses a method for ensuring stable communication in various types of communication including V2X communication.

## DISCLOSURE OF THE INVENTION

## TECHNICAL TASK

The technical task of the present invention is to provide a method for correcting a frequency offset in V2X communication and apparatus for the same.

## TECHNICAL SOLUTIONS

The invention is defined by the appended claims. Embodiments not covered by the scope of the claims should be understood as examples useful for understanding the invention. To achieve these objects and other advantages, in an aspect of the present invention, provided herein is a method for correcting a frequency offset by a user equipment (UE) in vehicle-to-vehicle (V2V) communication, including: receiving a subframe including a reference signal from a transmitting end; and correcting the frequency offset based on the reference signal. In this case, the reference signal may be mapped to resource elements with either even or odd subcarrier indices in each of four symbols in the subframe. In addition, correcting the frequency offset may include comparing repeated signals repeated at a time interval corresponding to a first symbol among the four symbols, and each of the repeated signals may correspond to the reference signal mapped to the first symbol, wherein the reference signal includes a demodulation reference signal (DMRS), wherein the first symbol is composed of twelve resource elements, each having a subcarrier index, wherein a first DMRS sequence with a length of 6 is applied to the reference signal mapped to the first symbol, and wherein the first DMRS sequence is made up of part of a preconfigured second DMRS sequence with a length of 12.

Preferably, the four symbols may be equally spaced in the subframe.

Preferably, comparing the repeated signals may include comparing the repeated signals in a frequency domain by performing a Fast Fourier Transform (FFT) or a half-FFT on the repeated signals.

Preferably, the corrected frequency offset may be applied to the first symbol and symbols adjacent to the first symbol.

In another aspect of the present invention, provided herein is a user equipment (UE) for correcting a frequency offset in vehicle-to-vehicle (V2V) communication, including: a transceiver; and a processor configured to control the transceiver. In this case, the processor may be further configured to: receive, from a transmitting end, a subframe including a reference signal which is mapped to resource elements with either even or odd subcarrier indices in each of four symbols in the subframe; and correct the frequency offset based on the reference signal by comparing repeated signals repeated at a time interval corresponding to a first symbol among the four symbols. In addition, each of the repeated signals may correspond to the reference signal mapped to the first symbol, wherein the reference signal includes a demodulation reference signal (DMRS), wherein the first symbol is composed of twelve resource elements, each having a subcarrier index, wherein a first DMRS sequence with a length of 6 is applied to the reference signal mapped to the first symbol, and wherein the first DMRS sequence is made up of part of a preconfigured second DMRS sequence with a length of 12.

## ADVANTAGEOUS EFFECTS

According to embodiments of the present invention, it is possible to provide an improved method for correcting a frequency offset in V2X communication and apparatus for the same.

In addition, according to the embodiments of the present invention, it is possible to improve the channel estimation performance while maintaining the reference signal overhead.

The effects of the present invention are not limited to the above-described effects and other effects which are not described herein may be derived by those skilled in the art from the following description of the embodiments of the present invention. That is, effects which are not intended by the present invention may be derived by those skilled in the art from the embodiments of the present invention.

## DESCRIPTION OF DRAWINGS

The accompanying drawings, which are included to provide a further understanding of the invention and are incorporated in and constitute a part of this application, illustrate embodiments of the invention and together with the description serve to explain the principle of the invention.

FIG. 1 shows a system architecture of an LTE system which is an example of a wireless communication system.
FIG. 2 illustrates a control plane of a radio protocol.
FIG. 3 illustrates a user plane of a radio protocol.
FIG. 4 illustrates the structure of a type-1 radio frame.
FIG. 5 illustrates the structure of a type-2 radio frame.
FIG. 6 illustrates a resource grid in a downlink slot.
FIG. 7 illustrates a downlink subframe structure.
FIG. 8 illustrates an uplink subframe structure.
FIG. 9 is a diagram for a simplified D2D communication network.
FIG. 10 is a diagram for a configuration of a resource unit according to an example.
FIG. 11 is a schematic diagram showing a V2X communication network.
FIG. 12 is a diagram illustrating legacy CRS and DRS patterns.
FIG. 13 is a diagram illustrating an example of a DM RS pattern.
FIG. 14 is a diagram illustrating examples of a CSI-RS pattern.
FIG. 15a illustrates DMRS mapping in the case of a normal cyclic prefix (CP).
FIG. 15b illustrates DMRS mapping in the case of an extended cyclic prefix (CP).
FIG. 16 illustrates DMRS mapping according to an embodiment of the present invention.
FIG. 17 illustrates signal repetition in one symbol according to an embodiment of the present invention.
FIG. 18 illustrates DMRS mapping according to another embodiment of the present invention.
FIG. 19 illustrates DMRS mapping according to still another embodiment of the present invention.
FIG. 20 is a flowchart illustrating a frequency offset correction method according to an embodiment of the present invention.
FIG. 21 is a schematic diagram illustrating devices according to an embodiment of the present invention.

## BEST MODE FOR INVENTION

The following embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment.

In this specification, the embodiments of the present invention will be described, focusing on a data transmission and reception relationship between vehicles. In the following description, a vehicle means the vehicle which a terminal is mounted on, and it may be called a terminal. In addition, a road side unit may mean an infrastructure capable of connecting to a base station, relay or network. In this case, the base station may serve as a terminal node of the network over which the base station directly communicates with the terminal. Moreover, specific operations illustrated as being conducted by the base station may also be conducted by an upper node of the base station. Further, a pedestrian may mean the person moving on bicycle or the person carrying a terminal.

It will be apparent that various operations performed for communication with the user equipment UE in the network which includes a plurality of network nodes along with the base station may be performed by the base station BS or network nodes other than the base station BS. At this time, the base station BS may be replaced with terms such as a fixed station, Node B, eNode B (eNB), and an access point (AP). A relay node may be replaced with terms such as a relay node (RN) and a relay station (RS). Also, a terminal may be replaced with terms such as a user equipment (UE), a mobile station (MS), a mobile subscriber station (MSS), and a subscriber station (SS).

Specific terminologies hereinafter used in the embodiments of the present invention are provided to assist understanding of the present invention, and various modifications may be made in the specific terminologies within the range that they do not depart from the scope of the present invention as defined by the appended claims.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

The embodiments of the present invention may be supported by standard documents disclosed in at least one of wireless access systems, i.e., IEEE 802 system, 3GPP system, 3GPP LTE system, 3GPP LTE, 3GPP LTE-A (LTE-Advanced) system, and 3GPP2 system. Also, all terminologies disclosed herein may be described by the above standard documents.

The following technology may be used for various wireless access systems such as CDMA (code division multiple access), FDMA (frequency division multiple access), TDMA (time division multiple access), OFDMA (orthogonal frequency division multiple access), and SC-FDMA (single carrier frequency division multiple access). The CDMA may be implemented by the radio technology such as universal terrestrial radio access (UTRA) or CDMA2000. The TDMA may be implemented by the radio technology such as global system for mobile communications (GSM)/general packet radio service (GPRS)/enhanced data rates for GSM evolution (EDGE). The OFDMA may be implemented by the radio technology such as IEEE 802.11 (Wi-Fi), IEEE 802.16 (WiMAX), IEEE 802.20, and evolved UTRA (E-UTRA). The UTRA is a part of a universal mobile telecommunications system (UMTS). A 3rd generation partnership project long term evolution (3GPP LTE) communication system is a part of an evolved UMTS (E-UMTS) that uses E-UTRA, and uses OFDMA in a downlink while uses SC-FDMA in an uplink. LTE-advanced (LTE-A) is an evolved version of the 3GPP LTE system. WiMAX may be described by the IEEE 802.16e standard (WirelessMAN-OFDMA Reference System) and the advanced IEEE 802.16m standard (WirelessMAN-OFDMA Advanced system). Although the following description will be based on the 3GPP LTE system and the 3GPP LTE-A system to clarify description, it is to be understood that the scope of the present invention is not limited to the 3GPP LTE and the 3GPP LTE-A system.

## LTE system architecture

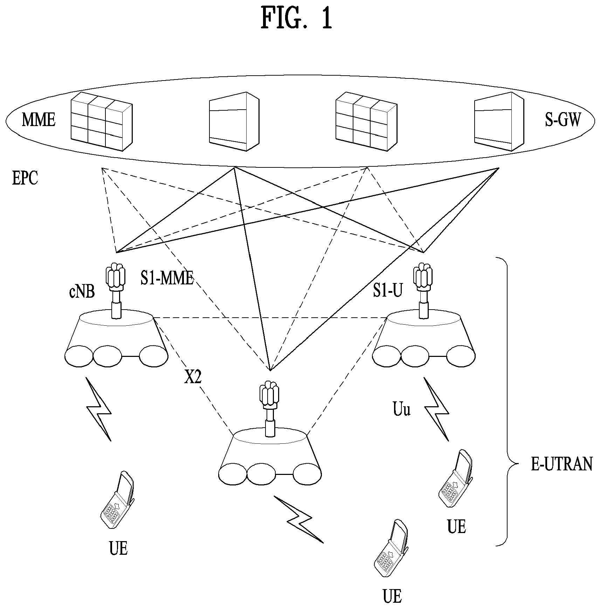

The architecture of an LTE system, which is an example of a wireless communication system to which the present invention is applicable, will be described with reference to FIG. 1. The LTE system is a mobile communication system that has evolved from UMTS. As shown in FIG. 1, the LTE system architecture may be broadly divided into an Evolved UMTS Terrestrial Radio Access Network (E-UTRAN) and an Evolved Packet Core (EPC). The E-UTRAN includes a user equipment (UE) and an Evolved NodeB (eNB). An interface between a UE and an eNB is referred to as a Uu interface, and an interface between eNBs is referred to as an X2 interface. The EPC includes a mobility management entity (MME) functioning as the control plane and a serving gateway (S-GW) functioning as the user plane. An interface between an eNB and an MME is referred to as an S1-MME interface, and an interface between an eNB and an S-GW is referred to as an S1-U interface, and the two interfaces may also be called an S1 interface.

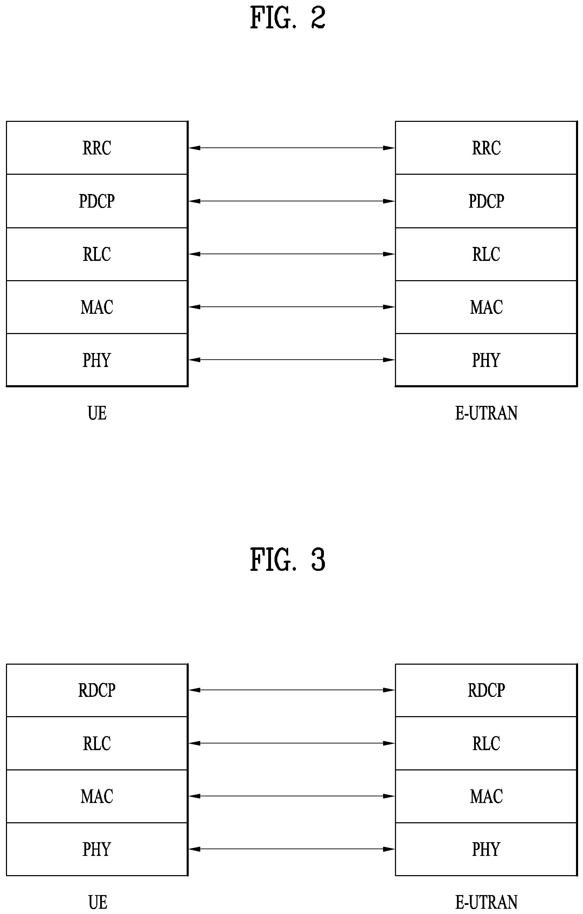

A radio interface protocol is defined in the Uu interface which is a radio section, wherein the radio interface protocol is horizontally comprised of a physical layer, a data link layer and a network layer, and vertically divided into a user plane for user data transmission and a control plane for signaling (control signal) transfer. Such a radio interface protocol may be typically classified into L1 (first layer) including a PHY which is a physical layer, L2 (second layer) including Media Access Control (MAC)/Radio Link Control (RLC)/Packet Data Convergence Protocol (PDCP) layers, and L3 (third layer) including a Radio Resource Control (RRC) layer as illustrated in FIGs. 2 and 3, based on the three lower layers of the Open System Interconnection (OSI) reference model widely known in the field of communication systems. These layers exist as a pair in the UE and E-UTRAN, and are responsible for data transmission of the Uu interface.

Hereinafter, each layer of a radio protocol shown in FIGs. 2 and 3 is described. FIG. 2 illustrates a control plane of a radio protocol, and FIG. 3 illustrates a user plane of a radio protocol.

The physical (PHY) layer serving as the first layer (L1) provides an information transfer service for a higher layer using a physical channel. The PHY layer is connected to the Media Access Control (MAC) layer serving as a higher layer over a transport channel. Through the transport channel, data is transferred from the MAC layer to the physical layer and vice versa. In this case, the transport channel is broadly divided into a dedicated transport channel and a common transport channel depending on whether or not the channel is shared. In addition, data is transferred between different PHY layers, i.e., between a PHY layer of a transmitter and a PHY layer of a receiver over a physical channel using radio resources.

There are various layers in the second layer. The MAC layer serves to map various logical channels to various transport channels and to perform logical channel multiplexing of mapping a plurality of logical channels to one transport channel. The MAC layer is connected to the Radio Link Control (RLC) layer, which is a higher layer, through a logical channel. The logical channel is broadly divided into a control channel for transmitting information on the control plane and a traffic channel for transmitting information on the user plane according to the type of information to be transmitted.

The RLC layer of the L2 segments and concatenates data received from a higher layer to adjust the data size such that the data is suitable for a lower layer to transmit the data in a radio section. To ensure various QoS levels required by various radio bearers (RBs), the RLC layer provides three RLC modes, namely, Transparent Mode (TM), Unacknowledged Mode (UM), and Acknowledged Mode (AM). Particularly, the AM RLC performs a retransmission function using an Automatic Repeat and Request (ARQ) function so as to implement reliable data transmission.

In order to efficiently transmit IP packets such as IPv4 or IPv6 packets in a radio section having a narrow bandwidth, the packet data convergence protocol (PDCP) layer of the L2 performs header compression to reduce the size of an IP packet header containing relatively large and unnecessary control information. This makes it possible to transmit only necessary information in the header portion of the data, thereby increasing the transmission efficiency of the radio section. In the LTE system, the PDCP layer also performs a security function, which consists of a ciphering function to prevent a third party from intercepting data and an integrity protection function to prevent a third party from manipulating data.

The Radio Resource Control (RRC) layer located at the top of the third layer (L3) is defined only in the control plane and is responsible for control of logical, transport, and physical channels in association with configuration, reconfiguration and release of Radio Bearers (RBs). Here, the RB refers to a logical path that the L1 and L2 of the radio protocol provide for data communication between the UE and the UTRAN. Generally, configuring an RB means that a radio protocol layer and channel characteristics needed to provide a specific service are defined and detailed parameters and operation methods thereof are configured. The RB is divided into a Signaling RB (SRB) and a Data RB (DRB). The SRB is used as a transmission passage of RRC messages in the control plane, and the DRB is used as a transmission passage of user data in the user plane.

## LTE/LTE-A resource structure/channel

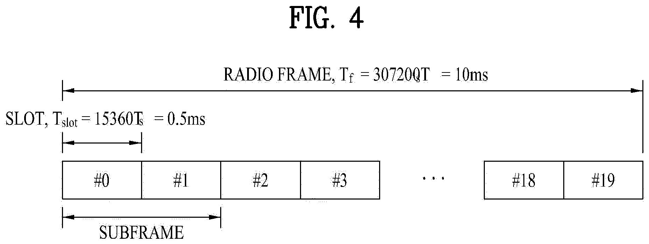

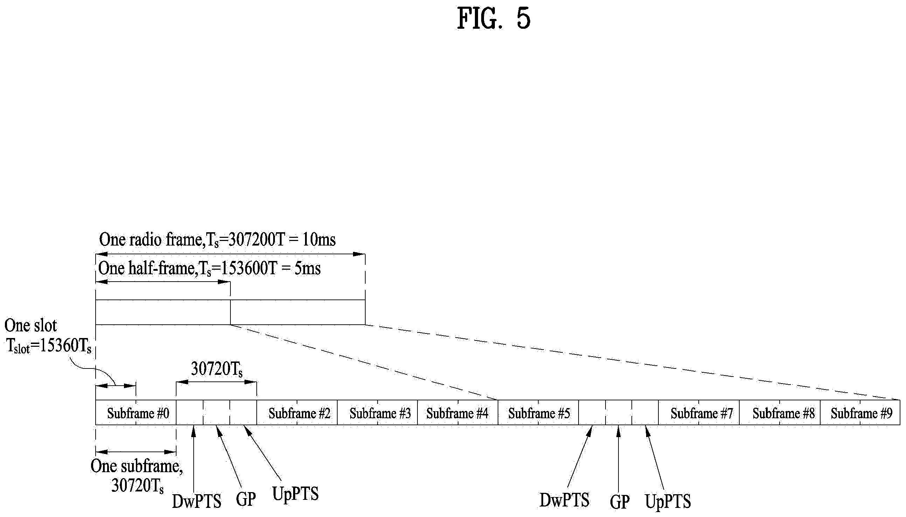

Hereinafter, a DL radio frame structure will be described with reference to FIGs. 4 and 5.

In a cellular OFDM wireless packet communication system, an uplink (UL)/downlink (DL) data packet is transmitted on a subframe-by-subframe basis, and one subframe is defined as a predetermined time interval including a plurality of OFDM symbols. 3GPP LTE supports a type-1 radio frame structure applicable to frequency division duplex (FDD) and a type-2 radio frame structure applicable to time division duplex (TDD).

FIG. 4 illustrates the type-1 radio frame structure. A downlink radio frame is divided into 10 subframes. Each subframe is further divided into two slots in the time domain. A unit time during which one subframe is transmitted is defined as transmission time interval (TTI). For example, one subframe may be 1ms in duration and one slot may be 0.5ms in duration. A slot may include a plurality of orthogonal frequency division multiplexing (OFDM) symbols in the time domain and includes a plurality of resource blocks (RBs) in the frequency domain. Because the 3GPP LTE system adopts OFDMA for downlink, an OFDM symbol represents one symbol period. An OFDM symbol may be referred to as an SC-FDMA symbol or symbol period. A Resource Block (RB) is a resource allocation unit including a plurality of contiguous subcarriers in a slot.

FIG. 5 illustrates the type-2 radio frame structure. The type-2 radio frame includes two half frames each having 5 subframes, a downlink pilot time slot (DwPTS), a guard period (GP), and an uplink pilot time slot (UpPTS). Each subframe includes two slots. The DwPTS is used for initial cell search, synchronization, or channel estimation in a UE, whereas the UpPTS is used for channel estimation in an eNB and uplink transmission synchronization in a UE. The GP is a period between a downlink and an uplink, for eliminating interference with the uplink caused by multi-path delay of a downlink signal. A subframe is composed of two slots irrespective of radio frame type.

The above-described radio frame structures are purely exemplary and thus it is to be noted that the number of subframes in a radio frame, the number of slots in a subframe, or the number of symbols in a slot may vary.

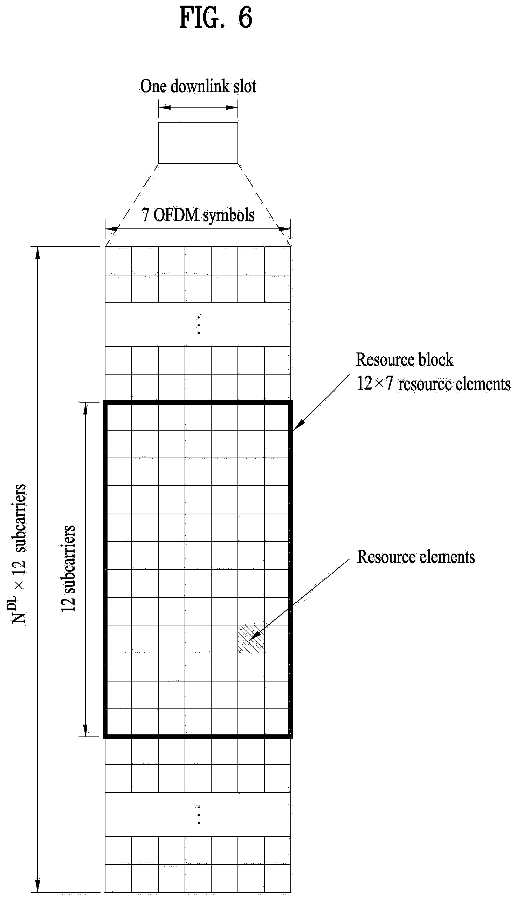

FIG. 6 illustrates a resource grid for a downlink slot. A downlink slot includes 7 OFDM symbols in the time domain and an RB includes 12 subcarriers in the frequency domain, which does not limit the scope of the present invention as defined by the appended claims. For example, a slot includes 7 OFDM symbols in the case of normal CP, whereas a slot includes 6 OFDM symbols in the case of extended CP. Each element of the resource grid is referred to as a resource element (RE). An RB includes 12x7 REs. The number of RBs in a downlink slot, NDL depends on a downlink transmission bandwidth. An uplink slot may have the same structure as a downlink slot.

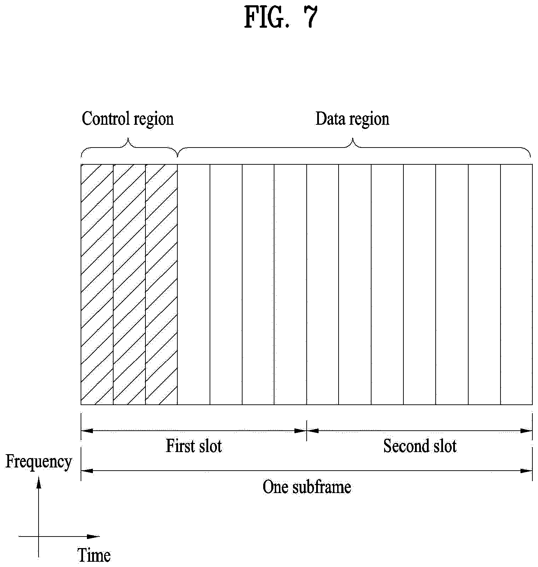

FIG. 7 illustrates a downlink subframe structure. Up to three OFDM symbols at the start of the first slot in a downlink subframe are used for a control region to which control channels are allocated and the other OFDM symbols of the downlink subframe are used for a data region to which a PDSCH is allocated. Downlink control channels used in 3GPP LTE include a physical control format indicator channel (PCFICH), a physical downlink control channel (PDCCH), and a physical hybrid automatic repeat request (ARQ) indicator channel (PHICH). The PCFICH is located in the first OFDM symbol of a subframe, carrying information about the number of OFDM symbols used for transmission of control channels in the subframe. The PHICH delivers a HARQ acknowledgment/negative acknowledgment (ACK/NACK) signal in response to an uplink transmission. Control information carried on the PDCCH is called downlink control information (DCI). The DCI includes uplink resource allocation information, downlink resource allocation information or an uplink transmit (Tx) power control command for an arbitrary UE group. The PDCCH delivers information about resource allocation and a transport format for a Downlink Shared Channel (DL-SCH), resource allocation information about an Uplink Shared Channel (UL-SCH), paging information of a Paging Channel (PCH), system information on the DL-SCH, information about resource allocation for a higher-layer control message such as a Random Access Response transmitted on the PDSCH, a set of transmission power control commands for individual UEs of a UE group, transmission power control information, Voice Over Internet Protocol (VoIP) activation information, etc. A plurality of PDCCHs may be transmitted in the control region. A UE may monitor a plurality of PDCCHs. A PDCCH is formed by aggregation of one or more consecutive Control Channel Elements (CCEs). A CCE is a logical allocation unit used to provide a PDCCH at a coding rate based on the state of a radio channel. A CCE corresponds to a plurality of REs. The format of a PDCCH and the number of available bits for the PDCCH are determined according to the correlation between the number of CCEs and a coding rate provided by the CCEs. An eNB determines the PDCCH format according to DCI transmitted to a UE and adds a Cyclic Redundancy Check (CRC) to control information. The CRC is masked by an Identifier (ID) known as a Radio Network Temporary Identifier (RNTI) according to the owner or usage of the PDCCH. If the PDCCH is directed to a specific UE, its CRC may be masked by a cell-RNTI (C-RNTI) of the UE. If the PDCCH carries a paging message, the CRC of the PDCCH may be masked by a Paging Indicator Identifier (P-RNTI). If the PDCCH carries system information, particularly, a System Information Block (SIB), its CRC may be masked by a system information ID and a System Information RNTI (SI-RNTI). To indicate that the PDCCH carries a Random Access Response in response to a Random Access Preamble transmitted by a UE, its CRC may be masked by a Random Access-RNTI (RA-RNTI).

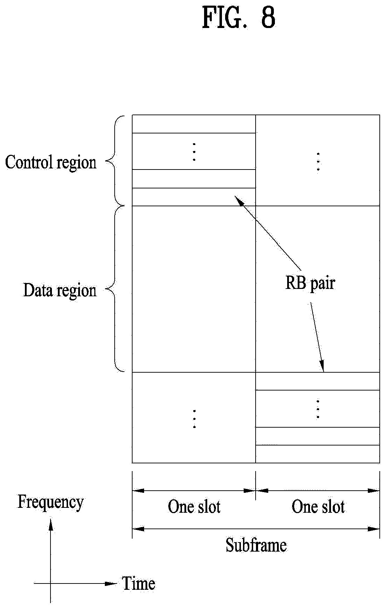

FIG. 8 illustrates an uplink subframe structure. An uplink subframe may be divided into a control region and a data region in the frequency domain. A physical uplink control channel (PUCCH) carrying uplink control information is allocated to the control region and a physical uplink shared channel (PUSCH) carrying user data is allocated to the data region. To maintain single carrier property, a UE does not transmit a PUSCH and a PUCCH simultaneously. A PUCCH for a UE is allocated to an RB pair in a subframe. The RBs of the RB pair occupy different subcarriers in two slots. Thus it is said that the RB pair allocated to the PUCCH is frequency-hopped over a slot boundary.

In the following, various embodiments for a UE to perform device to device communication (hereinafter, D2D communication, D2D direct communication, etc.) are explained. In explaining the D2D communication, 3GPP LTE/LTE-A is mainly explained as an example. Yet, the D2D communication can also be applied to a different communication system (e.g., IEEE 802.16, WiMAX, etc.).

## D2D communication type

D2D communication can be classified into a network coordinated D2D communication type and an autonomous D2D communication type according to whether a D2D communication is performed by a control of a network. The network coordinated D2D communication type can be classified again into a type of transmitting data only by D2D (data only in D2D) and a type of performing an access control only by a network (connection control only in network) according to the extent of involvement of the network. For clarity, the type of transmitting data only by the D2D is called a 'network concentrated D2D communication type' and the type of performing access control only by the network is called a 'distributed D2D communication type' in the following.

According to the network concentrated D2D communication type, data is exchanged between D2D terminals only. An access control (connection control) and radio resource allocation (grant message) between the D2D terminals are performed by a network. The D2D terminals can transmit and receive data or specific control information using a radio resource allocated by the network. For instance, HARQ ACK/NACK feedback for the data reception between the D2D terminals or channel state information (CSI) is not directly exchanged between the D2D terminals. Instead, the feedback or the CSI can be transmitted to a different D2D terminal via the network. Specifically, when the network establishes a D2D link between the D2D terminals and allocates a radio resource to the established D2D link, a transmission D2D terminal and a reception D2D terminal can perform D2D communication using the allocated radio resource. In particular, according to the network concentrated D2D communication type, D2D communication between D2D terminals is controlled by the network and the D2D terminals can perform D2D communication using a radio resource allocated by the network.

A network according to the distributed D2D communication type performs a more limitative role compared to a network according to the network concentrated D2D communication type. Although the network in the distributed D2D communication type performs an access control between D2D terminals, radio resource allocation (grant message) between the D2D terminals can be autonomously occupied by the D2D terminals via contention without a help of the network. For instance, HARQ ACK/NACK feedback for the reception of data between the D2D terminals or channel state information can be directly exchanged between the D2D terminals without passing through the network.

As mentioned earlier in the foregoing example, D2D communication can be classified into the network concentrated D2D communication type and the distributed D2D communication type according to the extent of involvement of a network. In this case, a common characteristic between the network concentrated D2D communication type and the distributed D2D communication type is a D2D access control capable of being performed by the network.

Specifically, a network according to the network coordinated D2D communication type can establish a connection between D2D terminals in a manner of establishing a D2D link between the D2D terminals intending to perform D2D communication. In case of establishing the D2D link between the D2D terminals, the network can assign a physical D2D link identifier (LID) to the established D2D link. The physical D2D link ID can be used as an identifier for identifying each of a plurality of D2D links in case that there are a plurality of the D2D links among a plurality of D2D terminals.

Unlike the network concentrated type and the distributed D2D communication type, according to an autonomous D2D communication type, D2D terminals can freely perform D2D communication without a help of a network. In particular, unlike the network concentrated type and the distributed D2D communication type, an access control, occupation of a radio resource and the like can be autonomously performed by the D2D terminals in the autonomous D2D communication type. If necessary, the network may provide the D2D terminals with D2D channel information capable of being used in a corresponding cell.

**Configuration of D2D communication link**

For clarity, a terminal performing or capable of performing the D2D communication, which is a direct communication between terminals, is called a D2D terminal (D2D terminal). In the following description, a 'UE' may correspond to a D2D terminal. When it is necessary to distinguish a transmitting end from a receiving end, in case of performing the D2D communication, a D2D terminal transmitting or intending to transmit data to a different D2D terminal using a radio resource given to a D2D link is called a transmission D2D terminal. On the contrary, a terminal receiving or intending to receive data from the transmission D2D terminal is called a reception D2D terminal. If there exist a plurality of reception D2D terminals, which receive or intend to receive data from the transmission D2D terminal, a plurality of the reception D2D terminals can be distinguished from each other using a prefix such as 'first to N'. Moreover, for clarity, such a random node of a network as a base station configured to perform access control between D2D terminals or allocate a radio resource to a D2D link, a D2D server, an access/session management server and the like are commonly called a 'network' in the following description.

In order for a D2D terminal performing D2D communication to transmit data to a different D2D terminal via the D2D communication, it is necessary for the D2D to check whether or not D2D terminals capable of transmitting and receiving data are located near the D2D terminal. To this end, the D2D terminal performs D2D peer discovery. The D2D terminal performs D2D discovery within a discovery interval and all D2D terminals may share the discovery interval. The D2D terminal monitors logical channels of a discovery region within the discovery interval to receive D2D discovery signals transmitted by different D2D terminals. Having received the signals of the different D2D terminals, the D2D terminal makes a list of adjacent D2D terminals using the received signal. And, the D2D terminal broadcasts information (i.e., an identifier) of the D2D terminal within the discovery interval and the different D2D terminals receive the broadcasted D2D discovery signal. By doing so, the different D2D terminals are able to know that the D2D terminal exists within a range capable of performing D2D communication.

Information broadcasting for D2D discovery can be periodically performed. And, broadcasting timing can be determined in advance by a protocol and can be notified to D2D terminals. The D2D terminal can transmit/broadcast a signal during a part of the discovery interval. Each of the D2D terminals may monitor signals potentially transmitted by different D2D terminals during the rest of the D2D discovery interval.

For example, a D2D discovery signal may correspond to a beacon signal. And, D2D discovery intervals may include a plurality of symbols (e.g., OFDM symbols). A D2D terminal selects at least one symbol belonging to a D2D discovery interval to transmit/broadcast a D2D discovery signal. And, the D2D terminal may transmit a signal corresponding to a tone of the symbol selected by the D2D terminal.

After D2D UEs discovers each other through a D2D discovery process, the D2D UEs perform a connection establishment process. By doing so, one D2D UE can transmit traffic to the other D2D UE.

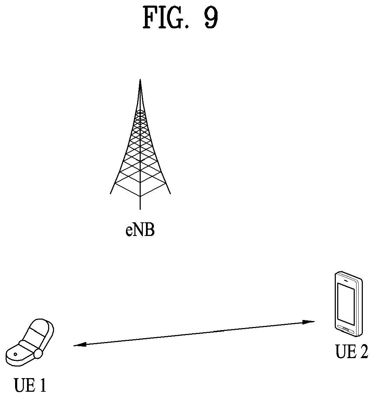

FIG. 9 is a diagram for a simplified D2D communication network.

Referring to FIG. 9, D2D communication is performed between UEs (UE1 and UE2) supporting D2D communication. In general, a user equipment (UE) corresponds to a terminal of a user. If such a network device as an eNB (evolved Node B) transmits and receives a signal according to a communication scheme between the UEs UE1 and UE2), the eNB can be considered as a UE as well.

A UE1 selects a resource unit corresponding to a specific resource from a resource pool corresponding to a set of resources and the UE1 transmits a D2D signal using the selected resource unit. A UE2 corresponding to a reception UE receives a configuration of a resource pool in which the UE1 is able to transmit a signal and detects a signal of the UE1 in the resource pool. In this case, if the UE1 is located at the inside of coverage of an eNB, the eNB can inform the UE1 of the resource pool. If the UE1 is located at the outside of coverage of the eNB, the resource pool can be informed by a different UE or can be determined by a predetermined resource. In general, a resource pool includes a plurality of resource units. A UE selects one or more resource units from among a plurality of the resource units and may be able to use the selected resource unit(s) for D2D signal transmission.

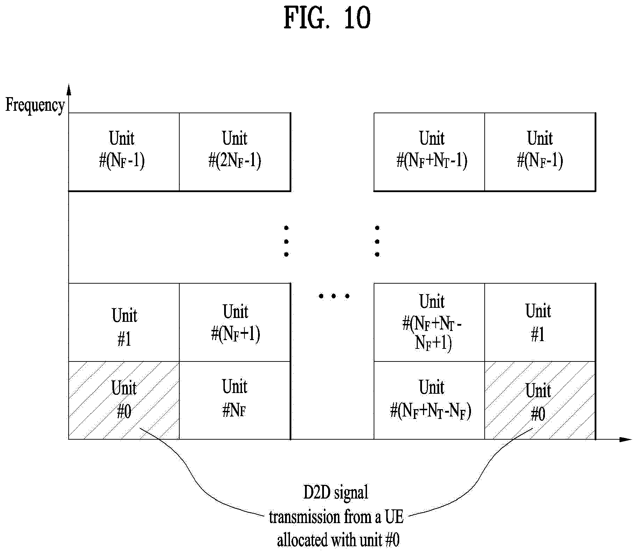

FIG. 10 is a diagram for a configuration of a resource unit according to an example.

In FIG. 10, a vertical axis corresponds to a frequency resource and a horizontal axis corresponds to a time resource. A radio resource is divided into the $N_T$ number of resource units in a time axis to configure the $N_T$ number of subframes. And, a frequency resource is divided into the $N_F$ number of resource units in a subframe. In particular, one subframe can include the $N_T$ number of symbols. In particular, it is able to define $N_F*N_T$ number of resource units in total.

A D2D transmission resource (unit #0) allocated to a unit number 0 is repeated in every $N_T$ number of subframes. In embodiment of FIG. 10, a resource pool can be repeated with a period of the $N_T$ number of subframes. As shown in FIG. 10, a specific resource unit may periodically and repeatedly appear. Or, an index of a physical resource unit to which a logical resource unit is mapped may change according to a predetermined pattern to obtain a diversity gain in time domain and/or frequency domain. For example, the logical resource unit can hop on time and/or frequency axis according to a predetermined pattern set to an actual physical resource unit. In FIG. 10, a resource pool may correspond to a set of resource units capable of being used by a UE intending to transmit a D2D signal.

The resource pool can be classified into various types. First of all, the resource pool can be classified according to contents of a D2D signal transmitted via each resource pool. For example, the contents of the D2D signal can be classified into various signals and a separate resource pool can be configured according to each of the contents.

[0058] - Scheduling assignment (SA): The SA may correspond to a signal including information on a resource position of a D2D data channel, information on MCS (modulation and coding scheme) necessary for modulating and demodulating a data channel, information on a MIMO transmission scheme, and the like. SA information may include an identifier of a target UE to which data of each transmission UE is to be transmitted. A signal including the SA information can be transmitted on an identical resource unit in a manner of being multiplexed with D2D data. In this case, an SA resource pool may correspond to a pool of resources that SA and D2D data are transmitted in a manner of being multiplexed.

[0059] - D2D data channel: The D2D data channel corresponds to a resource pool used by a transmission UE to transmit user data using a resource designated by the SA. If an SA signal and a D2D data channel are transmitted in a manner of being multiplexed in an identical resource unit, D2D data channel except SA information can be transmitted only in a resource pool for the D2D data channel. In other word, resource elements (REs), which are used to transmit SA information in a specific resource unit of an SA resource pool, can also be used for transmitting D2D data in a D2D data channel resource pool.

[0060] - Discovery message: A discovery message resource pool corresponds to a resource pool for transmitting a discovery message that enables neighboring UEs to discover a transmission UE transmitting information such as ID of the UE, and the like.

As mentioned in the foregoing description, a D2D resource pool can also be classified according to content of a D2D signal. Yet, although contents of D2D signal are identical to each other, it may use a different resource pool according to a transmission/reception attribute of the D2D signal. For example, in case of the same D2D data channel or the same discovery message, the D2D data channel or the discovery signal can be classified into a different resource pool according to a transmission timing determination scheme (e.g., whether a D2D signal is transmitted at the time of receiving a synchronization reference signal or the timing to which a prescribed timing advance is added) of a D2D signal, a resource allocation scheme (e.g., whether a transmission resource of an individual signal is designated by an eNB or an individual transmission UE selects an individual signal transmission resource from a pool), a signal format (e.g., number of symbols occupied by a D2D signal in a subframe, number of subframes used for transmitting a D2D signal), and the like.

According to the aforementioned contents, a UE intending to transmit data via D2D selects an appropriate resource from an SA pool and transmits SA of the transmission UE. In this case, as a reference for selecting an SA resource pool, it may be able to preferentially select an SA resource interlocked with a resource that satisfies at least one of a resource not transmitting SA of a different UE and a resource which is expected not to transmit data in a following subframe according to SA of a different UE. In addition, the transmission UE may select an SA resource interlocked with a data transmission resource of which an interference level is expected to be low. And, the SA information can be broadcasted. In doing so, UEs belonging to a D2D communication system may receive the broadcasted SA information. In the following, 'transmitting' or 'sending' can be replaced with 'broadcasting'.

In the aforementioned D2D communication, the term 'D2D' can be replaced by 'sidelink'.

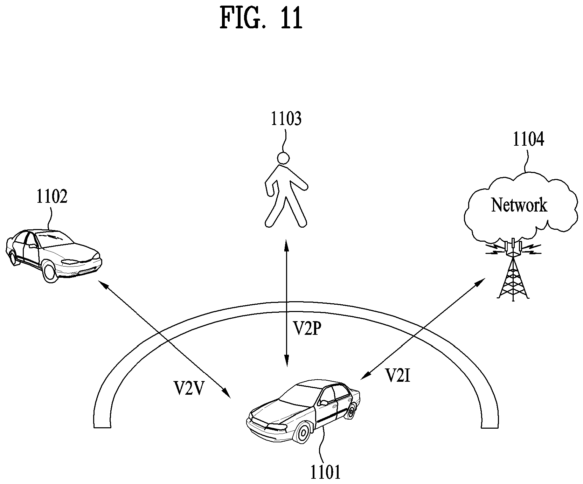

FIG. 11 is a schematic diagram showing a V2X communication network.

V2X communication may be categorized into V2V (vehicle-to-vehicle) communication, V2P (vehicle-to-pedestrian) communication, and V2I (vehicle-to-infrastructure entity) communication. V2V communication may refer to communication between vehicles 1101 and 1102. Traffic information and the like may be shared between the vehicles 1101 and 1102 through V2V communication. V2P communication may refer to communication between the vehicle 1101 and a device (e.g., a handheld terminal of a pedestrian or a bicycle rider) carried by a pedestrian 1103. Since the pedestrian 1103 can move along a sidewalk adjacent to a road as well, information on a danger on the road and the like may be shared through V2P communication. And, V2I communication may refer to communication between the vehicle and a roadside unit (RSU) 1104. The RSU 1104 may refer to a traffic infrastructure entity. For example, the RSU 1104 may include an entity that transmits a speed notification. For V2X communication, the vehicles 1101 and 1102, the RSU 1004 and the handheld device of the pedestrian 1103 may be equipped with transceivers. V2X communication may be implemented using a technology similar to D2D (device-to-device) communication of the communication standard of the 3GPP (3rd generation partnership project). And, V2X communication may be implemented using DSRC (dedicated short-range communication) technology of IEEE (institute of electrical and electronics engineers).

Hereinafter, a description will be given of a method for transmitting an alarm message in V2X communication according to an embodiment of the present invention. Although the present invention will be described, focusing on V2V communication, the following embodiments can be applied to V2I and/or V2P communication as well. In addition, although the embodiments will be explained with reference to 3GPP communication standards, they can be implemented based on the technologies associated with IEEE communication standards. Moreover, in this specification, the term "transmission" can be interchangeably used with the term "broadcasting". Further, a vehicle or pedestrian may mean a vehicle or pedestrian carrying a user equipment (UE), or it may directly indicate the UE.

**Reference Signals (RSs)**

In a wireless communication system, a packet is transmitted on a radio channel. In view of the nature of the radio channel, the packet may be distorted during the transmission. To receive the signal successfully, a receiver should compensate for the distortion of the reception signal using channel information. Generally, to enable the receiver to acquire the channel information, a transmitter transmits a signal known to both the transmitter and the receiver and the receiver acquires knowledge of channel information based on the distortion of the signal received on the radio channel. This signal is called a pilot signal or an RS.

In the case of data transmission and reception through multiple antennas, knowledge of channel states between transmission (Tx) antennas and reception (Rx) antennas is required for successful signal reception. Accordingly, an RS should be transmitted through each Tx antenna.

RSs in a mobile communication system may be divided into two types according to their purposes: RS for channel information acquisition and RS for data demodulation. Since its purpose lies in that a UE acquires downlink channel information, the former should be transmitted in a broad band and received and measured even by a UE that does not receive downlink data in a specific subframe. This RS is also used in a situation like handover. The latter is an RS that an eNB transmits along with downlink data in specific resources. A UE can estimate a channel by receiving the RS and accordingly can demodulate data. The RS should be transmitted in a data transmission area.

A legacy 3GPP LTE (e.g., 3GPP LTE release-8) system defines two types of downlink RSs for unicast services: a common RS (CRS) and a dedicated RS (DRS). The CRS is used for acquisition of information about a channel state, measurement of handover, etc. and may be referred to as a cell-specific RS. The DRS is used for data demodulation and may be referred to as a UE-specific RS. In a legacy 3GPP LTE system, the DRS is used for data demodulation only and the CRS can be used for both purposes of channel information acquisition and data demodulation.

CRSs, which are cell-specific, are transmitted across a wideband in every subframe. According to the number of Tx antennas at an eNB, the eNB may transmit CRSs for up to four antenna ports. For instance, an eNB with two Tx antennas transmits CRSs for antenna port 0 and antenna port 1. If the eNB has four Tx antennas, it transmits CRSs for respective four Tx antenna ports, antenna port 0 to antenna port 3.

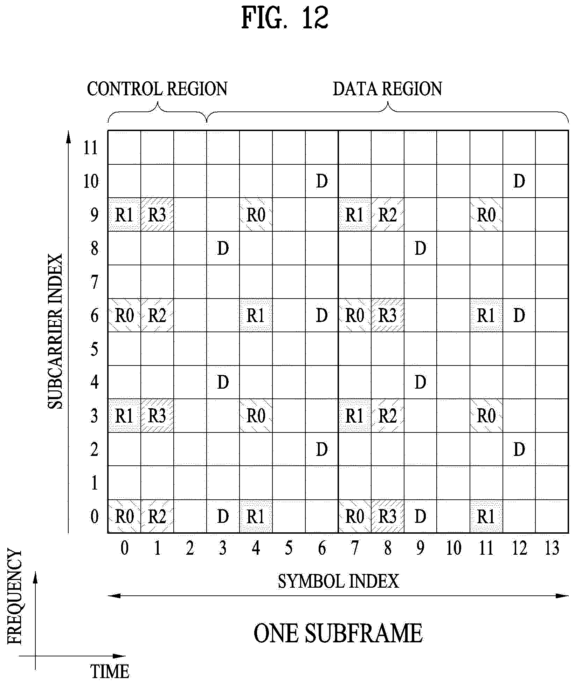

FIG. 12 illustrates a CRS and DRS pattern for an RB (including 14 OFDM symbols in time by 12 subcarriers in frequency in case of a normal CP) in a system where an eNB has four Tx antennas. In FIG. 12, REs labeled with 'R0', 'R1', 'R2' and 'R3' represent the positions of CRSs for antenna port 0 to antenna port 4, respectively. REs labeled with 'D' represent the positions of DRSs defined in the LTE system.

The LTE-A system, an evolution of the LTE system, can support up to eight Tx antennas. Therefore, it should also support RSs for up to eight Tx antennas. Because downlink RSs are defined only for up to four Tx antennas in the LTE system, RSs should be additionally defined for five to eight Tx antenna ports, when an eNB has five to eight downlink Tx antennas in the LTE-A system. Both RSs for channel measurement and RSs for data demodulation should be considered for up to eight Tx antenna ports.

One of significant considerations for design of the LTE-A system is backward compatibility. Backward compatibility is a feature that guarantees a legacy LTE terminal to operate normally even in the LTE-A system. If RSs for up to eight Tx antenna ports are added to a time-frequency area in which CRSs defined by the LTE standard are transmitted across a total frequency band in every subframe, RS overhead becomes huge. Therefore, new RSs should be designed for up to eight antenna ports in such a manner that RS overhead is reduced.

Largely, new two types of RSs are introduced to the LTE-A system. One type is CSI-RS serving the purpose of channel measurement for selection of a transmission rank, a modulation and coding scheme (MCS), a precoding matrix index (PMI), etc. The other type is demodulation RS (DM RS) for demodulation of data transmitted through up to eight Tx antennas.

Compared to the CRS used for both purposes of measurement such as channel measurement and measurement for handover and data demodulation in the legacy LTE system, the CSI-RS is designed mainly for channel estimation, although it may also be used for measurement for handover. Since CSI-RSs are transmitted only for the purpose of acquisition of channel information, they may not be transmitted in every subframe, unlike CRSs in the legacy LTE system. Accordingly, CSI-RSs may be configured so as to be transmitted intermittently (e.g. periodically) along the time axis, for reduction of CSI-RS overhead.

When data is transmitted in a downlink subframe, DM RSs are also transmitted dedicatedly to a UE for which the data transmission is scheduled. Thus, DM RSs dedicated to a particular UE may be designed such that they are transmitted only in a resource area scheduled for the particular UE, that is, only in a time-frequency area carrying data for the particular UE.

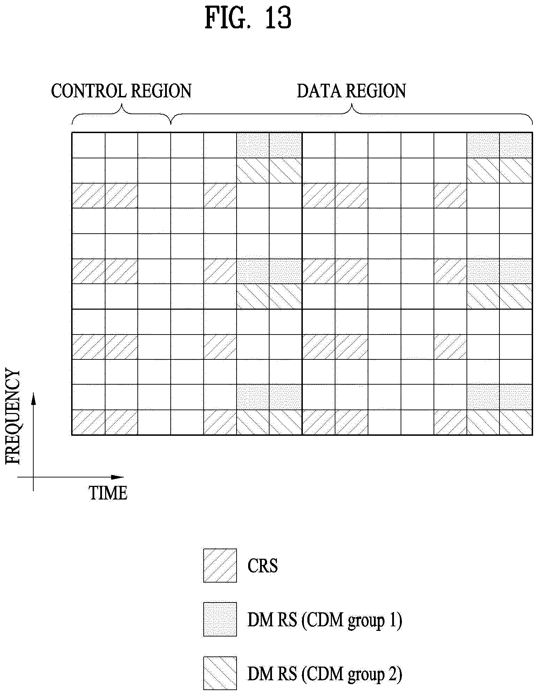

FIG. 13 illustrates an exemplary DM RS pattern defined for the LTE-A system. In FIG. 13, the positions of REs carrying DM RSs in an RB carrying downlink data (an RB having 14 OFDM symbols in time by 12 subcarriers in frequency in case of a normal CP) are marked. DM RSs may be transmitted for additionally defined four antenna ports, antenna port 7 to antenna port 10 in the LTE-A system. DM RSs for different antenna ports may be identified by their different frequency resources (subcarriers) and/or different time resources (OFDM symbols). This means that the DM RSs may be multiplexed in frequency division multiplexing (FDM) and/or time division multiplexing (TDM). If DM RSs for different antenna ports are positioned in the same time-frequency resources, they may be identified by their different orthogonal codes. That is, these DM RSs may be multiplexed in Code Division Multiplexing (CDM). In the illustrated case of FIG. 13, DM RSs for antenna port 7 and antenna port 8 may be located on REs of DM RS CDM group 1 through multiplexing based on orthogonal codes. Similarly, DM RSs for antenna port 9 and antenna port 10 may be located on REs of DM RS CDM group 2 through multiplexing based on orthogonal codes.

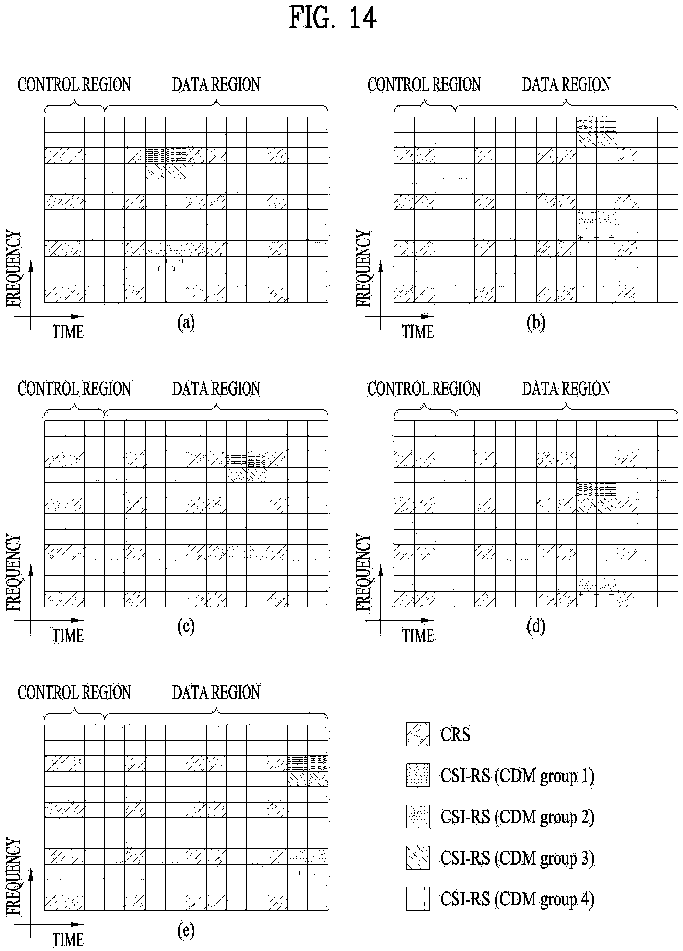

FIG. 14 illustrates exemplary CSI-RS patterns defined for the LTE-A system. In FIG. 14, the positions of REs carrying CSI-RSs in an RB carrying downlink data (an RB having 14 OFDM symbols in time by 12 subcarriers in frequency in case of a normal CP) are marked. One of the CSI-RS patterns illustrated in FIGS. 14(a) to 14(e) is available for any downlink subframe. CSI-RSs may be transmitted for eight antenna ports supported by the LTE-A system, antenna port 15 to antenna port 22. CSI-RSs for different antenna ports may be identified by their different frequency resources (subcarriers) and/or different time resources (OFDM symbols). This means that the CSI-RSs may be multiplexed in FDM and/or TDM. CSI-RSs positioned in the same time-frequency resources for different antenna ports may be identified by their different orthogonal codes. That is, these DM RSs may be multiplexed in CDM. In the illustrated case of FIG. 14(a), CSI-RSs for antenna port 15 and antenna port 16 may be located on REs of CSI-RS CDM group 1 through multiplexing based on orthogonal codes. CSI-RSs for antenna port 17 and antenna port 18 may be located on REs of CSI-RS CDM group 2 through multiplexing based on orthogonal codes. CSI-RSs for antenna port 19 and antenna port 20 may be located on REs of CSI-RS CDM group 3 through multiplexing based on orthogonal codes. CSI-RSs for antenna port 21 and antenna port 22 may be located on REs of CSI-RS CDM group 4 through multiplexing based on orthogonal codes. The same principle described with reference to FIG. 14(a) is applicable to the CSI-RS patterns illustrated in FIGS. 14(b) to 14(e).

RS patterns shown in FIGS. 12 to 14 are disclosed only for illustrative purposes, and the scope of the present invention is not limited only to a specific RS pattern. That is, even in the case in which RS patterns different from those of FIGS. 12 to 14 are defined and used, various embodiments of the present invention can also be equally applied thereto without difficulty.

Although the following description will be made based on vehicle-to-something (V2X) communication, for example, V2V communication, the invention can be applied to other types of communication including D2D communication. As described above, a frequency offset error may occur in a certain scenario where UEs move (e.g., V2X scenario). For example, if a frequency offset of a received signal goes over a predetermined level due to the Doppler effect, a receiving UE may fail to decode the received signal.

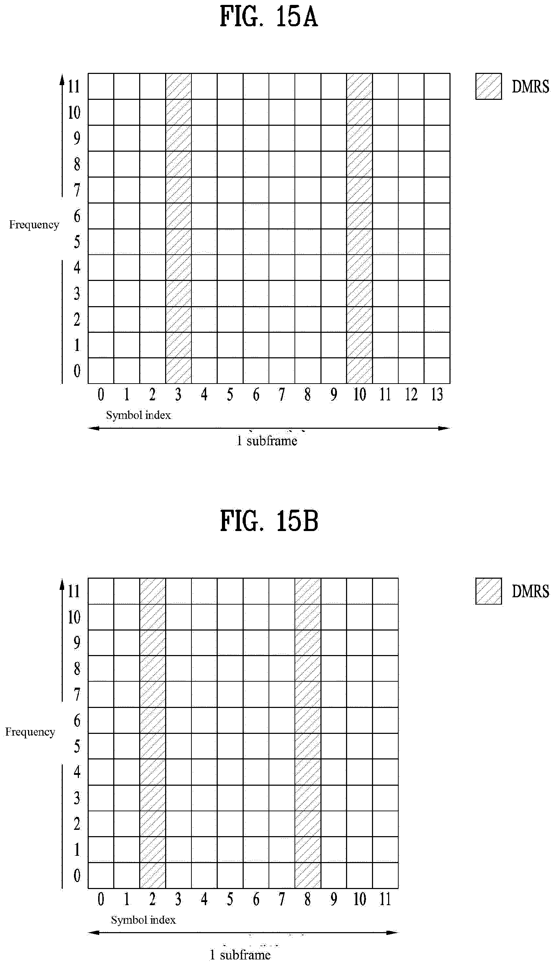

FIG. 15a illustrates DMRS mapping in the case of a normal cyclic prefix (CP), and FIG. 15b illustrates DMRS mapping in the case of an extended cyclic prefix (CP).

The subframe structure designed for the conventional LTE physical uplink shared channel (PUSCH) can be used in V2X communication. In the current LTE system, a DMRS in a subframe with the normal CP may be mapped as shown in FIG. 15a. For example, referring to FIG. 15a, a DMRS may be mapped to orthogonal frequency division multiplexing (OFDM) symbols 3 and 10. In addition, in the current LTE system, a DMRS in a subframe with the extended CP may be mapped as shown in FIG. 15b. For example, referring to FIG. 15b, a DMRS may be mapped to OFDM symbols 2 and 8.

Meanwhile, in the V2X scenario including the V2V scenario, 5.9 GHz of frequency, which is used for dedicated short range communication (DSRC), has been researched as the center frequency. In addition, for example, an initial frequency offset requirement for V2V communication can be defined as 10 ppm (parts per million). Moreover, a residual frequency offset request may be defined as +/- 0.1 ppm. For instance, two vehicles may be synchronized with each other based on a signal provided by a shared eNB, vehicle, or other sources. In this case, a frequency offset difference between the two vehicles may be +/- 0.2 ppm. For example, a first vehicle may be synchronized based on a signal from a second vehicle. In this case, a third vehicle may be synchronized with the first vehicle. That is, since the third vehicle is synchronized across the two vehicles, the synchronization of the third vehicle may be referred to as two-hop synchronization (hop-sync). Moreover, a fourth vehicle may be synchronized with the first vehicle. Thus, the fourth vehicle may have two-hop synchronization. In this case, a frequency offset difference between the third and fourth vehicles, which are synchronized with reference to the same first vehicle, may be +/- 0.4 ppm. For example, a frequency offset difference between two vehicles with three-hop synchronization with respect to the same vehicle may be +/- 0.6 ppm.

When a DMRS is mapped to two OFDM symbols in a subframe as shown in FIG. 15a, a receiving UE (e.g., vehicle) may perform frequency offset correction using the DMRS configured with two columns. In FIG. 15a, there are 5 OFDM symbols between first and second DMRSs. In this case, a time interval of 0.5 ms may exist between the two DMRSs. In addition, since the UE may estimate a change in the frequency offset change based on a change in the phase offset, the UE should be able to estimate the phase offset change due to increase in the frequency offset during 0.5 ms. Table 1 below shows increase in the phase offset during 0.5 ms according to the center frequency and hop synchronization.

[Table 1]

| Center frequency | One-hop sync (O.1 ppm) | Two-hop sync (0.4 ppm) | Three-hop sync (0.6 ppm) |
| --- | --- | --- | --- |
| 700 MHz | 70 Hz (0.22 rad) | 280 Hz (0.88 rad) | 420 Hz (1.32 rad) |
| 2 GHz | 200 Hz (0.63 rad) | 800 Hz (2.51 rad) | 1200 Hz (3.77 rad) |
| 5.9 GHz | 590 Hz (1.85 rad) | | |

As shown in Table 1, even though the frequency offset at the center frequency of 700 MHz is +/- 0.6 ppm, the increase in the phase offset does not exceed the value of pi. Thus, at the center frequency of 700 MHz, the current DMRS structure can be used for the frequency offset correction. However, when the frequency offset at the center frequency of 2 GHz is +/- 0.6 ppm, the phase offset value exceeds the value of pi. In this case, the UE may fail to correct the frequency offset.

Actually, the minimum frequency offset of V2V communication can be defined as +/- 0.2 ppm. As described above, when two vehicles are synchronized with reference to the same vehicle or eNB, the frequency offset can be assumed to be +/- 0.2 ppm. In this case, as shown in Table 1, a UE operating at the center frequency of 5.9 GHz may not correct the frequency offset using the current DMRS structure (e.g., the structure of FIG. 15a or 15b).

Table 2 shows a phase offset (in the unit of radian) varying depending on an interval between the frequency offset and each DMRS (OFDM symbol unit).

[Table 2]

| | 0.1ppm | 0.2ppm | 0.3ppm | 0.4ppm | 0.5ppm | 0.6ppm | 0.7ppm | 0.8ppm | 0.9ppm | 1.0ppm |
|---|---|---|---|---|---|---|---|---|---|---|
| 1 symbol | 0.264791 | 0.529583 | 0.794374 | 1.059165 | 1.323957 | 1.588748 | 1.853539 | 2.118331 | 2.383122 | 2.647913 |
| 2 symbols | 0.529583 | 1.059165 | 1.588748 | 2.118331 | 2.647913 | 3.1775 | 3.70708 | 4.23666 | 4.76624 | 5.29583 |
| 3 symbols | 0.794374 | 1.588748 | 2.383122 | 3.1775 | 3.97187 | 4.76624 | 5.56062 | 6.35499 | 7.14937 | 7.94374 |
| 4 symbols | 1.059165 | 2.118331 | 3.1775 | 4.23666 | 5.29583 | 6.35499 | 7.41416 | 8.47332 | 9.53249 | 10.5917 |
| 5 symbols | 1.323957 | 2.647913 | 3.97187 | 5.29583 | 6.61978 | 7.94374 | 9.2677 | 10.5917 | 11.9156 | 13.2396 |
| 6 symbols | 1.588748 | 3.1775 | 4.76624 | 6.35499 | 7.94374 | 9.53249 | 11.1212 | 12.71 | 14.2987 | 15.8875 |
| 7 symbols | 1.853539 | 3.70708 | 5.56062 | 7.41416 | 9.2677 | 11.1212 | 12.9748 | 14.8283 | 16.6819 | 18.5354 |
| 8 symbols | 2.118331 | 4.23666 | 6.35499 | 8.47332 | 10.5917 | 12.71 | 14.8283 | 16.9466 | 19.065 | 21.1833 |
| 9 symbols | 2.383122 | 4.76624 | 7.14937 | 9.53249 | 11.9156 | 14.2987 | 16.6819 | 19.065 | 21.4481 | 23.8312 |
| 10 symbols | 2.647913 | 5.29583 | 7.94374 | 10.5917 | 13.2396 | 15.8875 | 18.5354 | 21.1833 | 23.8312 | 26.4791 |
| 11 symbols | 2.912705 | 5.82541 | 8.73811 | 11.6508 | 14.5635 | 17.4762 | 20.3889 | 23.3016 | 26.2143 | 29.127 |
| 12 symbols | 3.1775 | 6.35499 | 9.53249 | 12.71 | 15.8875 | 19.065 | 22.2425 | 25.42 | 28.5975 | 31.775 |
| 13 symbols | 3.44229 | 6.88457 | 10.3269 | 13.7691 | 17.2114 | 20.6537 | 24.096 | 27.5383 | 30.9806 | 34.4229 |
| 14 symbols | 3.70708 | 7.41416 | 11.1212 | 14.8283 | 18.5354 | 22.2425 | 25.9495 | 29.6566 | 33.3637 | 37.0708 |

As shown in Table 2, when the frequency offset is +/- 0.2 ppm, a DMRS needs to be mapped at an interval consisting of at least five symbols for the frequency offset correction. In addition, when the frequency offset is +/- 0.4 ppm, a DMRS needs to be mapped at an interval consisting of at least two symbols. When the frequency offset is +/- 0.6 ppm, a DMRS needs to be mapped at an interval consisting of at least one symbol.

The present invention proposes a new type of DMRS mapping for enabling frequency offset correction at a high frequency offset. As described above with reference to Table 2, it is preferred to map a reference signal such as a DMRS at a short time interval for the frequency offset correction. For example, according to the present invention, a DMRS can be mapped at a time interval greater than that of the conventional DMRS or an interval including more OFDM symbols than those of the conventional DMRS. As shown in FIG. 15a and 15b, the conventional DMRS is mapped at the interval of 6 or 7 symbols within one subframe. If the DMRS interval is reduced, the performance of the frequency offset correction can be improved. However, in this case, since the DMRS is concentrated on specific resources, the channel estimation performance may be degraded. Additionally, for the frequency offset correction, an additional DMRS may be mapped to uplink resources. However, in this case, as the DMRS resources increase, the DMRS overhead increases. That is, there may be a problem of lack of resources for data transmission.

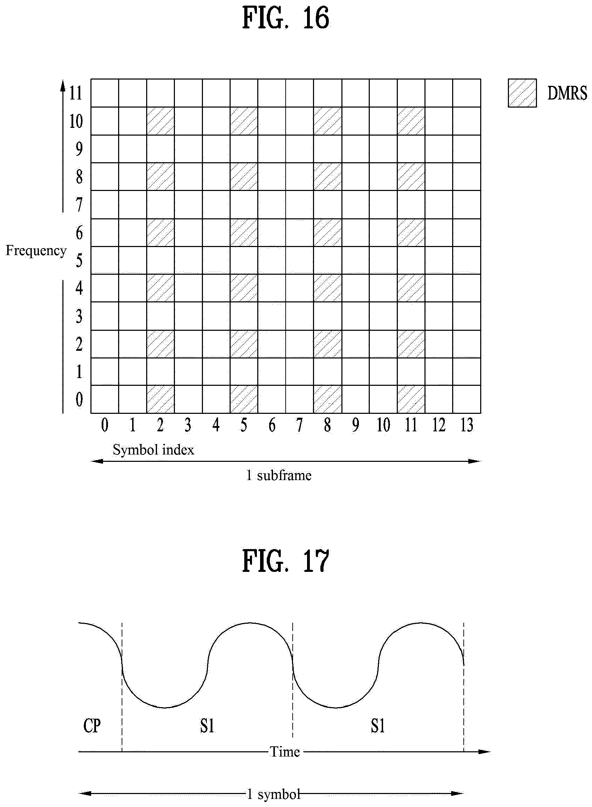

FIG. 16 illustrates DMRS mapping according to an embodiment of the present invention.

A method capable of reducing the DMRS interval for the frequency offset correction without increasing the DMRS overhead is required. To this end, for example, a comb type of DMRS may be used. The comb-type DMRS can be mapped to resource elements at the same interval in the frequency domain. For example, an additional DMRS may be mapped to two columns except the columns where the current uplink DMRS is mapped. That is, in the comb-type DMRS mapping, the DMRS can be mapped to four OFDM symbols within one subframe. In addition, to prevent the DMRS overhead from being increased, the DMRS may be mapped at an interval of two subcarriers in the same column (i.e., same OFDM symbol).

For example, the comb-type DMRS can be mapped as shown in FIG. 15. That is, referring to FIG. 16, the comb-type DMRS is mapped to four OFDM symbols in one subframe at the same interval. In addition, in the same OFDM symbol, the comb-type DMRS can be mapped at an interval of two subcarriers.

When a reference signal (e.g., DMRS) is mapped as shown in FIG. 16, the channel estimation performance can be improved because the reference signal is mapped at the same time interval in the time domain. In addition, since the reference signal is mapped at an interval of three symbols in the time domain, the frequency offset correction performance can also be improved. Moreover, in FIG. 16, symbols 0 and 13 can be used for automatic gain control (AGC) or Rx/Tx switching.

FIG. 17 illustrates signal repetition in one symbol according to an embodiment of the present invention.

When a comb-type reference signal is transmitted, the signal may be repeated in one symbol. As shown in FIG. 17, a signal S1 is repeated after the cyclic prefix (CP). In this case, it is possible to correct a frequency offset in the same symbol by comparing the repeated signals.

For example, assuming that a Fast Fourier Transform (FFT) has a size of N (where N is an integer greater than zero), each signal S1 except the CP has N/2 samples, and each sample of the signal is assumed to be $s_i$ (where i is a natural number). In this case, samples with indices from 0 to N/2-1 correspond to samples of the first signal of FIG. 17, and samples with indices from N/2 to N-1 correspond to samples of the second signal of FIG. 17. Thus, in the indices from 0 to N/2-1, sample $S_i$ is equal to sample $S_{i+N/2}$. In addition, since a phase change occurs when the signals (samples) with the same value go through a channel, the samples with the same value may be used as a reference for measuring the phase change.

The transmitted signal sample si goes through the channel and is then received. In this case, the received sample is defined as $r_i$. Since the sample si is equal to the sample $S_{i+N/2}$, the frequency offset can be estimated by comparing $r_i$ and $r_{i+N/2}$. Specifically, the frequency offset can be estimated as shown in Equation 1.

[Equation 1]

$$phase\ offset = \operatorname{atan}\{imag\ (A),\ real\ (A)\}/(N/2)$$

In Equation 1, atan indicates the arc tangent function. In this case, the phase offset of signal A can be calculated by determining the arc tangent of imaginary and real values of the signal A. In addition, by assuming that phase offset is in proportional to time, the arc tangent value can be divided by N/2. In this case, the phase offset in each sample interval can be calculated as shown in Equation 2.

[Equation 2]

$$A = \sum_{i=0}^{N/2} r_i^* r_{i+N/2}$$

In Equation 2, A means the phase offset calculation through comparison of the two same samples $r_i$ and $r_{i+N/2}$ that pass through the channel.

The phase offset calculated according to Equation 1 may mean a phase value in accordance with increase in each of the sample indices. Thus, the phase offset value of the received signal may be applied to OFDM symbols adjacent to reference signal OFDM symbols and the reference signal OFDM symbols.

For example, if the number of symbols corresponding to both the OFDM symbols adjacent to the reference signal OFDM symbols and the reference signal OFDM symbols is N2, the phase offset of the received signal can be corrected according to Equation 3 below.

[Equation 3]

$$r_i' = r_i \exp(-j \times phase\ offset \times (i + 1))$$

When the phase offset of the received signal is corrected according to Equation 3, the performance of the phase offset correction of the received signal can be improved. For example, in FIG. 16, the offset calculated based on the reference signal of symbol 2 can be applied to symbols 0, 1, 2, and 3. In addition, the offset calculated based on the reference signal of symbol 5 can be applied to symbols 4, 5, and 6. Moreover, the offset calculated based on the reference signal of symbol 11 can be applied to symbols 10, 11, 12, and 13. Further, for example, when symbol 0 and/or 13 is used for AGC or Rx/Tx switching, no offset may be applied to symbol 0 and/or 13.

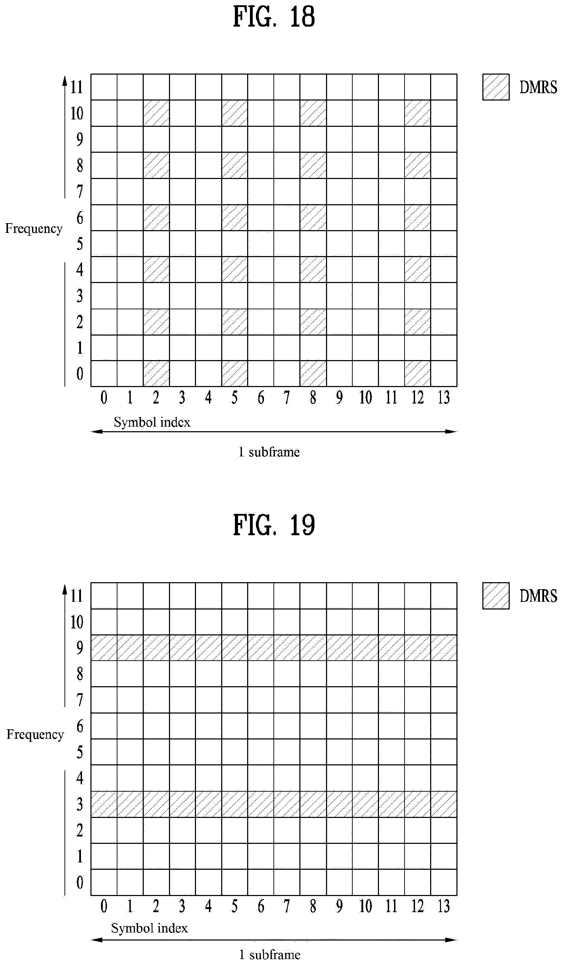

FIG. 18 illustrates DMRS mapping according to another embodiment of the present invention.

In the embodiment of FIG. 16, only the first OFDM symbol can be used for AGC and Rx/Tx switching. In this case, the DMRS can be mapped as shown in FIG. 18. That is, referring to FIG. 18, the reference signal is mapped to symbols 2, 5, 8, and 12, and in the same single symbol, it is mapped at an interval of two subcarriers. The description made with reference to FIGs. 16 and 17 can be equally applied to FIG. 18.

When the frequency offset correction is performed using the comb-type DMRS mapping, the following problems may occur. For example, two UEs may simultaneously use different frequency subcarriers to transmit data at the same time. In this case, since signals transmitted from the two UEs overlap with each other in the time domain, the above-described frequency offset correction may not be performed.

Therefore, the frequency offset correction may be performed in the frequency domain. In this case, the signal repetition show in FIG. 17 can be used. For convenience of description, the former repeated signal of FIG. 17 is referred to as a first repeated signal, and the latter repeated signal of FIG. 17 is referred to as a second repeated signal. In addition, a signal may be generated such that a received first repeated signal is attached to the back of another received first repeated signal, and this signal may be denoted by $R_1$. That is, the signal $R_1$ may be configured with two received first repeated signals. Similarly, a signal may be generated such that a received second repeated signal is attached to the back of another received second repeated signal, and this signal may be denoted by $R_2$. That is, the signal $R_2$ may be configured with two received first repeated signals. Alternatively, the signal $R_1$ may be simply generated by eliminating the second repeated signal from the received signal, and the signal $R_2$ may be simply generated by eliminating the first repeated signal from the received signal. By performing the FFT on the signals $R_1$ and $R_2$, it is possible to covert these signals into frequency-domain signals. In addition, by performing a half-FFT on the signals $R_1$ and $R_2$, the signals can also be converted into frequency-domain signals. Signals of corresponding subcarriers corresponding to frequency-domain components of the received signals can be defined as $f_{1i}$ and $f_{2i}$. In the case of the comb-type DMRS, $f_{1i}$ and $f_{2i}$ may be configured except unoccupied subcarriers (e.g., subcarriers where the DMRS is not mapped). In addition, $f_{1i}$ and $f_{2i}$ may be signals obtained by estimating even the positions of the unoccupied subcarriers using the reference signal converted into the frequency domain.

For example, each of $f_{1i}$ and $f_{2i}$ may be composed of N samples. By comparing $f_{1i}$ and $f_{2i}$ with respect to indices from 0 to N-1, it is possible to estimate the frequency offset. For example, the frequency offset can be estimated according to Equation 4.

[Equation 4]

$$phase\ offset = \text{atan}\{imag\ (A),\ real(A)\}/(0.5)$$

In Equation 4, atan indicates the arc tangent function. In this case, the phase offset of signal A can be calculated by determining the arc tangent of imaginary and real values of the signal A. In addition, by assuming that phase offset is in proportional to time, the arc tangent value can be divided by a half (0.5) symbol. In this case, the phase offset in each sample interval can be calculated as shown in Equation 5.

[Equation 5]

$$A = \sum_{i=0}^{N-1} f_{1i}^* f_{2i}$$

The phase offset calculated according to Equations 4 and 5 may mean a phase value that increases whenever the symbol index increases by 1. Thus, the phase offset value of the received signal may be applied to OFDM symbols adjacent to reference signal OFDM symbols and the reference signal OFDM symbols.
For example, if the number of symbols corresponding to both the OFDM symbols adjacent to the reference signal OFDM symbols and the reference signal OFDM symbols is N2, the phase offset of the received signal can be corrected according to Equation 6 below.

[Equation 6]

$$f_{ki}' = f_{ki} \exp(-j \times phase\ offset \times (k+1))$$

In Equation 6, $f_{ki}$ means a $k^{th}$ frequency-domain signal in order of time. When the frequency offset is corrected according to Equation 6, it is possible to improve the performance of the phase offset correction of the received signal.
Hereinafter, a description will be given of sequences for DMRS transmission in V2X communication. In the current D2D communication, the convention uplink DMRS design is used for DMRS design. Details of the conventional uplink DMRS design can be found in clause 5.5 of 3GPP TS 36.211. Specifically, a base sequence, cyclic shift (CS), and orthogonal cover code (OCC) of the conventional uplink DMRS design are modified for the DMRS design of the D2D communication. More specifically, parameters are changed as shown in Table 3 below to design a physical sidelink shared channel (PSSCH) and a physical sidelink control channel (PSCCH) of the D2D communication.

[Table 3]

| Parameter in clause 5.5.2.1 (TR 36.211) | | PSSCH | PSCCH |
|---|---|---|---|
| | | enabled | disabled |
| Group hopping | $n_{ID}^{RS}$ | $n_{ID}^{SA}$ | - |
| | $n_s$ | $n_{ss}^{PSSCH}$ | - |
| | $f_{ss}$ | $n_{ID}^{SA}$ mod 30 | 0 |

(continued)

| Parameter in clause 5.5.2.1 (TR 36.211) | | PSSCH | PSCCH |
|---|---|---|---|
| Sequence hopping | | disabled | disabled |
| Cyclic shift | $n_{cs\_\lambda}$ | $\lfloor n_{ID}^{SA}/2 \rfloor \bmod 8$ | 0 |
| Orthogonal sequence | $\lfloor w^\lambda(0)\ w^\lambda(1) \rfloor$ | $[+1 +1]$ if $n_{ID}^{SA} \bmod 2 = 0$ <br> $[+1 -1]$ if $n_{ID}^{SA} \bmod 2 = 1$ | $[+1 +1]$ |
| Reference signal length | $M_{sc}^{RS}$ | $M_{sc}^{PSSCH}$ | $M_{sc}^{PSCCH}$ |
| Number of layers | $\upsilon$ | 1 | 1 |
| Number of antenna ports | $P$ | 1 | 1 |

Similar to the D2D communication, in V2X communication, a DMRS base sequence, cyclic shift (CS), and orthogonal cover code (OCC) can be modified as follows. In addition, regarding the above-described comb-type DMRS design, which type of comb can be selected will be explained in the following.

For example, at least some bits of a transmitting UE ID, a receiving UE ID, a transmitting UE group ID, or a receiving UE group ID may be used for $n_{ID}^{RS}$. This ID may also be referred to as $n_{ID}^{SA}$. In this method, the remaining bits of $n_{ID}^{SA}$ may be used for the CS or OCC. Thus, in each $n_{ID}^{SA}$, a DMRS may be randomized or orthogonalized. For example, when 3 bits of $n_{ID}^{SA}$ is used for the CS, $n_{ID}^{SA}$ may be replaced with $\lfloor n_{ID}^{SA}/8 \rfloor \bmod 30$.

For example, a new slot number defined in a resource pool may be used for $n_s$. For example, a plurality of UEs connected to different eNBs may use the same resource pool through a new slot number defined in each resource pool. In this case, the slot number may be shared between the UEs through $n_s$.

Some bits of $n_{ID}^{SA}$ may be used for $f_{ss}$. When the remaining bits of $n_{ID}^{SA}$ are used for the CS of OCC, in each group ID of scheduling assignment (SA), a DMRS may be randomized or orthogonalized. For example, 3 bits of $n_{ID}^{SA}$ are used for the CS, $n_{CS,\lambda}$ may be replaced with $\lfloor n_{ID}^{SA} \rfloor \bmod 8$.

For example, $\lfloor w^\lambda(0)w^\lambda(1) \rfloor$ may be used as a fixed value for the OCC. To achieve the channel correction based on the frequency offset or the Doppler shift in V2X communication, a method of mapping a DMRS to four symbols can be considered. When a DMRS is mapped to four symbols, the above-described comb-type mapping can be applied. In addition, similar to the current uplink DMRS, the (comb-type) DMRS may be mapped to all the symbols in the frequency domain where the (conventional) DMRS is mapped. When it is mapped to four symbols, the OCC is composed of four sequences. In this case, if the OCC does not have fixed values, it may be difficult to distinguish between OCC values due to the frequency offset or the Doppler shift. To prevent this problem, the OCC with fixed values may be used. For example, the fixed OCC values may be [1 1 1 1], [1 1 -1 -1], [1 -1 1 -1], or [1 -1 -1 1]. In addition, the fixed OCC values can be changed according to a shared channel or synchronization channel.

For example, when the aforementioned comb-type DMRS is applied, a receiving end may be explicitly informed about which comb type is used. For example, when the comb-type DMRS has an interval of two subcarriers, it may be mapped to even-numbered resource elements or odd-numbered resource elements in the same symbol. Thus, information on the resource elements to which the DMRS is mapped may be delivered to the receiving end. Alternatively, the information on the resource elements where the DMRS is mapped may be interconnected to another parameter and then delivered to the receiving end. That is, in the case of the comb-type DMRS, a different mapping scheme related to resource elements may be applied according to $n_{ID}^{SA}$ · Alternatively, the mapping scheme related to resource elements may be determined according to some bits of $n_{ID}^{SA}$ · For example, whether the DMRS is mapped to either even-numbered Res or odd-numbered REs can be determined according to Equation 7.

[Equation 7]

$$\text{Even if } n_{ID}^{SA} \bmod 2 = 0$$
$$\text{Odd if } n_{ID}^{SA} \bmod 2 = 1$$

If the RE mapping type for the comb-type DMRS is determined according to Equation 7, each of the receiving UE, transmitting UE group, and receiving UE group may use a different DMRS mapping pattern. Thus, it is possible to prevent reference signals from colliding with each other.

In the comb-type DMRS, a different RE mapping type may be applied according to the priority of transmission messages. When the message priority is interconnected to the DMRS pattern, the receiving end may determine the priority of the currently received messages by decoding the DMRS.

In addition, in the comb-type DMRS, the RE mapping type can be changed according to types of transmitting UE. For example, the transmitting UE may include a pedestrian, a vehicle, and/or a road side unit (RSU). Thus, the receiving UE can determine the type of the transmitting UE by decoding the DMRS. Moreover, for example, in the comb-type DMRS, the RE mapping type can be changed according to types of target UE. For example, the receiving UE may also include a pedestrian, a vehicle, and/or a road side unit (RSU). Thus, the receiving UE can determine the type of the target UE by decoding the DMRS. Further, the receiving UE may determine the type of UE that will receive a corresponding message based on the RE mapping type. For example, if the target UE is a vehicle and the receiving UE is a pedestrian, the receiving UE may discard the corresponding message.

In the aforementioned comb-type DMRS, all the current LTE uplink DMRS sequences may not be used. In the case of a control channel, a small amount of resources, for example, one resource block may be used. For the current LTE uplink DMRS, a 12-length DMRS sequence and a 24-length DMRS sequence have been defined within three resource blocks. If one resource block is used for the comb-type DMRS, a 6-length DMRS sequence is required. In addition, if three resource blocks are used, an 18-length DMRS sequence is required. However, since only the 12-length and 24-length DMRS sequences are defined for the current uplink DMRS sequence, a DMRS sequence for the comb-type DMRS should be defined.

The LTE uplink DMRS sequence is generated by computers in consideration of the correlation and peak-to-average power ratio (PAPR). Therefore, the current LTE uplink DMRS sequence may be assumed to be a low-correlation sequence. Hereinafter, a comb-type DMRS sequence using the existing LTE uplink DMRS sequence will be explained. For example, the comb-type DMRS sequence may be generated by truncating a part of the LTE uplink DMRS sequence.

An N-length DMRS sequence may be used for the comb-type DMRS. In this case, N can be assumed to be greater than 0 and smaller than 13. For example, the comb-type DMRS sequence may be created by truncating the 12-length DMRS sequence designed for the existing LTE uplink DMRS by N from the head thereof. In addition, for example, when N is greater than 12 and smaller than 25, the comb-type DMRS sequence may be created by truncating the 24-length LTE uplink DMRS sequence by N from the head thereof.

For instance, it is possible to use the 6-length comb-type DMRS sequence. Table 4 below shows DMRS sequences in accordance with the current LTE DMRS sequence group (u).

[Table 4]

| u | 0 | 1 | 2 | 3 | 4 | 5 | 6 | 7 | 8 | 9 | 10 | 11 |
|---|---|---|---|---|---|---|---|---|---|---|----|----|
| 0 | -1 | 1 | 3 | -3 | 3 | 3 | 1 | 1 | 3 | 1 | -3 | 3 |
| 1 | 1 | 1 | 3 | 3 | 3 | -1 | 1 | -3 | -3 | 1 | -3 | 3 |
| 2 | 1 | 1 | -3 | -3 | -3 | -1 | -3 | -3 | 1 | -3 | 1 | -1 |
| 3 | -1 | 1 | 1 | 1 | 1 | -1 | -3 | -3 | 1 | -3 | 3 | -1 |
| 4 | -1 | 3 | 1 | -1 | 1 | -1 | -3 | -1 | 1 | -1 | 1 | 3 |
| 5 | 1 | -3 | 3 | -1 | -1 | 1 | 1 | -1 | -1 | 3 | -3 | 1 |
| 6 | -1 | 3 | -3 | -3 | -3 | 3 | 1 | -1 | 3 | 3 | -3 | 1 |
| 7 | -3 | -1 | -1 | -1 | 1 | -3 | 3 | -1 | 1 | -3 | 3 | 1 |
| 8 | 1 | -3 | 3 | 1 | -1 | -1 | -1 | 1 | 1 | 3 | -1 | 1 |
| 9 | 1 | -3 | -1 | 3 | 3 | -1 | -3 | 1 | 1 | 1 | 1 | 1 |
| 10 | -1 | 3 | -1 | 1 | 1 | -3 | -3 | -1 | -3 | -3 | 3 | -1 |
| 11 | 3 | 1 | -1 | -1 | 3 | 3 | -3 | 1 | 3 | 1 | 3 | 3 |
| 12 | 1 | -3 | 1 | 1 | -3 | 1 | 1 | 1 | -3 | -3 | -3 | 1 |
| 13 | 3 | 3 | -3 | 3 | -3 | 1 | 1 | 3 | -1 | -3 | 3 | 3 |
| 14 | -3 | 1 | -1 | -3 | -1 | 3 | 1 | 3 | 3 | 3 | -1 | 1 |
| 15 | 3 | -1 | 1 | -3 | -1 | -1 | 1 | 1 | 3 | 1 | -1 | -3 |
| 16 | 1 | 3 | 1 | -1 | 1 | 3 | 3 | 3 | -1 | -1 | 3 | -1 |
| 17 | -3 | 1 | 1 | 3 | -3 | 3 | -3 | -3 | 3 | 1 | 3 | -1 |
| 18 | -3 | 3 | 1 | 1 | -3 | 1 | -3 | -3 | -1 | -1 | 1 | -3 |
| 19 | -1 | 3 | 1 | 3 | 1 | -1 | -1 | 3 | -3 | -1 | -3 | -1 |
| 20 | -1 | -3 | 1 | 1 | 1 | 1 | 3 | 1 | -1 | 1 | -3 | -1 |

(continued)

| u | 0 | 1 | 2 | 3 | 4 | 5 | 6 | 7 | 8 | 9 | 10 | 11 |
|---|---|---|---|---|---|---|---|---|---|---|----|----|
| 21 | -1 | 3 | -1 | 1 | -3 | -3 | -3 | -3 | -3 | 1 | -1 | -3 |
| 22 | 1 | 1 | -3 | -3 | -3 | -3 | -1 | 3 | -3 | 1 | -3 | 3 |
| 23 | 1 | 1 | -1 | -3 | -1 | -3 | 1 | -1 | 1 | 3 | -1 | 1 |
| 24 | 1 | 1 | 3 | 1 | 3 | 3 | -1 | 1 | -1 | -3 | -3 | 1 |
| 25 | 1 | -3 | 3 | 3 | 1 | 3 | 3 | 1 | -3 | -1 | -1 | 3 |
| 26 | 1 | 3 | -3 | -3 | 3 | -3 | 1 | -1 | -1 | 3 | -1 | -3 |
| 27 | -3 | -1 | -3 | -1 | -3 | 3 | 1 | -1 | 1 | 3 | -3 | -3 |
| 28 | -1 | 3 | -3 | 3 | -1 | 3 | 3 | -3 | 3 | 3 | -1 | -1 |
| 29 | 3 | -3 | -3 | -1 | -1 | -3 | -1 | 3 | -3 | 3 | 1 | -1 |

In Table 4, each row indicates each of the LTE uplink DMRS sequence groups (u from 0 to 29), and each number of the first row indicate an index in the DMRS sequence groups. When the 6-length DMRs sequence is used as described above, first 6 sequences of the 12-length DMRS sequence may be used as the 6-length DMRs sequence. For example, the DMRS sequences having indices from 0 to 5 may be used. For instance, the comb-type DMRS sequence shown in Table 5 below may be used.

[Table 5]

| u | 0 | 1 | 2 | 3 | 4 | 5 |
|---|---|---|---|---|---|---|
| 0 | -1 | 1 | 3 | -3 | 3 | 3 |
| 1 | 1 | 1 | 3 | 3 | 3 | -1 |
| 2 | 1 | 1 | -3 | -3 | -3 | -1 |
| 3 | -1 | 1 | 1 | 1 | 1 | -1 |
| 4 | -1 | 3 | 1 | -1 | 1 | -1 |
| 5 | 1 | -3 | 3 | -1 | -1 | 1 |
| 6 | -1 | 3 | -3 | -3 | -3 | 3 |
| 7 | -3 | -1 | -1 | -1 | 1 | -3 |
| 8 | 1 | -3 | 3 | 1 | -1 | -1 |
| 9 | 1 | -3 | -1 | 3 | 3 | -1 |
| 10 | -1 | 3 | -1 | 1 | 1 | -3 |
| 11 | 3 | 1 | -1 | -1 | 3 | 3 |
| 12 | 1 | -3 | 1 | 1 | -3 | 1 |
| 13 | 3 | 3 | -3 | 3 | -3 | 1 |
| 14 | -3 | 1 | -1 | -3 | -1 | 3 |
| 15 | 3 | -1 | 1 | -3 | -1 | -1 |

(continued)

| u | 0 | 1 | 2 | 3 | 4 | 5 |
|---|---|---|---|---|---|---|
| 16 | 1 | 3 | 1 | -1 | 1 | 3 |
| 17 | -3 | 1 | 1 | 3 | 3 | 3 |
| 18 | -3 | 3 | 1 | 1 | -3 | 1 |
| 19 | -1 | 3 | 1 | 3 | 1 | -1 |
| 20 | -1 | -3 | 1 | 1 | 1 | 1 |
| 21 | -1 | 3 | -1 | 1 | -3 | -3 |
| 22 | 1 | 1 | -3 | -3 | -3 | -3 |
| 23 | 1 | 1 | -1 | -3 | -1 | -3 |
| 24 | 1 | 1 | 3 | 1 | 3 | 3 |
| 25 | 1 | -3 | 3 | 3 | 1 | 3 |
| 26 | 1 | 3 | -3 | -3 | 3 | -3 |
| 27 | -3 | -1 | -3 | -1 | -3 | 3 |
| 28 | -1 | 3 | -3 | 3 | -1 | 3 |
| 29 | 3 | -3 | -3 | -1 | -1 | -3 |

Moreover, for example, the comb-type DMRS sequence may have a different length from that of the current LTE uplink DMRS sequence. For example, the length of the comb-type DMRS sequence can be assumed to be N. For instance, N can be greater than 0 and smaller than 13. In addition, it can be assumed that the 12-length DMRS sequence for the LTE uplink DMRS is mapped to all resource elements of one resource block of the frequency band in the frequency domain. In this case, depending on types of comb DMRS, the DMRS sequence may be applied to only the resource elements used for transmitting the DMRS. Moreover, when N is greater than 12 and smaller than 25, it can be also assumed that the 24-length DMRS sequence for the LTE uplink DMRS is mapped to all resource elements of two resource blocks of the frequency band in the frequency domain. In this case, depending on types of comb DMRS, the DMRS sequence may be applied to only the resource elements where the DMRS is actually transmitted as well.

For example, the comb-type DMRS can be mapped to even-numbered resource elements. In this case, to transmit one resource block, the DMRS is mapped to six even-numbered resource elements. The sequences with even indices (0, 2, 4, 6, 8, and 10) shown in Table 4 may be used as the 6-length comb-type DMRS sequence. For example, Table 6 below shows 6-length comb-type DMRS sequences according to the present embodiment. On the other hand, when the DMRS is mapped to odd-numbered resource elements, the sequence with odd indices (1, 3, 5, 7, 9, and 11) shown in Table 4 may be used as the 6-length comb-type DMRS sequence.

[Table 6]

| u | 0 | 1 | 2 | 3 | 4 | 5 |
|---|---|---|---|---|---|---|
| 0 | -1 | 3 | 3 | 1 | 3 | -3 |
| 1 | 1 | 3 | 3 | 1 | -3 | -3 |
| 2 | 1 | -3 | -3 | -3 | 1 | 1 |
| 3 | -1 | 1 | 1 | -3 | 1 | 3 |
| 4 | -1 | 1 | 1 | -3 | 1 | 1 |
| 5 | 1 | 3 | -1 | 1 | -1 | -3 |
| 6 | -1 | -3 | -3 | 1 | 3 | -3 |
| 7 | -3 | -1 | 1 | 3 | 1 | 3 |
| 8 | 1 | 3 | -1 | -1 | 1 | -1 |
| 9 | 1 | -1 | 3 | -3 | 1 | 1 |

(continued)

| u | 0 | 1 | 2 | 3 | 4 | 5 |
|---|---|---|---|---|---|---|
| 10 | -1 | -1 | 1 | -3 | -3 | 3 |
| 11 | 3 | -1 | 3 | -3 | 3 | 3 |
| 12 | 1 | 1 | -3 | 1 | -3 | -3 |
| 13 | 3 | -3 | -3 | 1 | -1 | 3 |
| 14 | -3 | -1 | -1 | 1 | 3 | -1 |
| 15 | 3 | 1 | -1 | 1 | 3 | -1 |
| 16 | 1 | 1 | 1 | 3 | -1 | 3 |
| 17 | -3 | 1 | -3 | -3 | 3 | 3 |
| 18 | -3 | 1 | -3 | -3 | -1 | 1 |
| 19 | -1 | 1 | 1 | -1 | -3 | -3 |
| 20 | -1 | 1 | 1 | 3 | -1 | -3 |
| 21 | -1 | -1 | -3 | -3 | -3 | -1 |
| 22 | 1 | -3 | -3 | -1 | -3 | -3 |
| 23 | 1 | -1 | -1 | 1 | 1 | -1 |
| 24 | 1 | 3 | 3 | -1 | -1 | -3 |
| 25 | 1 | 3 | 1 | 3 | 3 | -1 |
| 26 | 1 | -3 | 3 | 1 | -1 | -1 |
| 27 | -3 | -3 | -3 | 1 | 1 | -3 |
| 28 | -1 | -3 | -1 | 3 | 3 | -1 |
| 29 | 3 | -3 | -1 | -1 | -3 | 1 |

Further, if the DMRS with a length not supported by the current LTE uplink DMRS is used as described above, a pseudo-random sequence may be used to generate the comb-type DMRS sequence like the downlink DMRS sequence. The N-length DMRS sequence may be generated according to Equation 8.

[Equation 8]

$$s(m) = \frac{1}{\sqrt{2}}\big(1 - 2 \cdot c(2m)\big) + j\frac{1}{\sqrt{2}}\big(1 - 2 \cdot c(2m + 1)\big),$$
$$m = 0, 1, \ldots, N - 1$$

In Equation 8, c(i) can be determined by the pseudo-random sequence. Since the number of current LTE uplink DMRS sequences is 30 (cf. Table 4), 30 initial values, $c_{init}$ may be designed.

In D2D (sidelink) communication of 3GPP LTE Release 12, only one DMRS is used for a control channel. This is because since a plurality of pieces of control information is decoded in the control channel, it is difficult for a UE to perform blind decoding on even a DMRS sequence. However, in V2X communication, a control channel resource pool may not be frequency-division multiplexed with a data channel resource pool, that is, frequency division multiplexing (FDM) may not be performed on both the control channel resource pool and data channel resource pool. Thus, the V2X communication may use a plurality of DMRS sequences. In this case, a DMRS of scheduling assignment (SA) may be determined based on a combination of at least some of a base sequence, cyclic shift (CS), and/or orthogonal cover code (OCC) of the DMRS sequence. In addition, it is possible to achieve DMRS interference randomization and improve communication performance as well.

Meanwhile, if there is an error in either the scheduling assignment or data channel, it may be determined that both the scheduling assignment and data channel are erroneous. Thus, the DMRS of the scheduling assignment may be interconnected with that of the data channel. That is, as different DMRS sequences are used in the scheduling assignment to mitigate interference thereof, the DMRS sequence interconnected with the DMRS of the scheduling assignment may be used for data to mitigate interference thereof.

For example, a specific parameter, "x" may be used to determine the DMRS sequence for the scheduling assignment. In this case, at least some or all of the DMRS sequence for the data may be determined based on the specific parameter, "x". Alternatively, when the number of DMRS sequences of the scheduling assignment is "y", numbering may be performed on y DMRS sequences. For example, the numbering of the y DMRS sequences may be performed using a bitmap. Further, some or all of the numbered y sequences may be used to determine the DMRS sequence for the data.

For example, the above-described parameter "x" may be a part of a transmitting UE ID (reception ID or previously configured or signaled ID). In addition, the parameter "x" may be a value obtained by mapping the CS or OCC to the bitmap. Moreover, the value to which the parameter "x" is mapped can be changed according to the priority of messages. Further, the parameter "x" may be used as a message priority value. However, in the foregoing description, a plurality of CSs and/or OCCs can be applied to either the data or SA.

In the above-described embodiments, a reference signal (e.g., DMRS) can be frequency-division multiplexed with data in the same symbol. For example, a reference signal may be mapped to N resource elements in one subframe. In this case, N reference signal sequences (e.g., DMRS sequences) may be generated. The generated reference signal sequences may be mapped to the resource elements in frequency-first order or time-first order. In time-first mapping, the sequences are mapped first along the time axis. For example, the sequences may be mapped in the symbol index order of resource elements, where the reference signal is mapped, in a first subcarrier and then mapped in the symbol index order of resource elements, where the reference signal is mapped, in a second subcarrier. In addition, in frequency-first mapping, the sequences are mapped first along the frequency axis. For example, the sequences may be mapped in the subcarrier index order of resource elements, where the reference signal is mapped, in a first symbol and then mapped in the subcarrier index order of resource elements, where the reference signal is mapped, in a second symbol. Moreover, in D2D and V2X communication, the reference signal may not be mapped to, for example, the first and/or last symbols of a subframe.

FIG. 19 illustrates DMRS mapping according to still another embodiment of the present invention.

In the embodiment of FIG. 19, reference signal sequences (e.g., DMRS sequences) can be mapped, for example, in the time-first order. The reference signal sequences are mapped to subcarrier 3 in the time-first order and then mapped to subcarrier 9 in the time-first order. In addition, in the embodiment of FIG. 19, reference signal sequences can be mapped in the frequency-first order. In this case, the reference signal sequences may be mapped within symbol 0 in ascending order of subcarrier indices (e.g., from subcarrier 3 to subcarrier 9) or in descending order (e.g., from subcarrier 9 to subcarrier 3). In the frequency-first mapping, the reference signal sequences may be mapped first to all resource elements of symbol 0 and then mapped to resource elements of symbol 1.

In Equation 8, $c_{init}$ can be preset as a specific value. For example, when a message that does not require a separate channel like the scheduling assignment and discovery is transmitted, $c_{init}$ can be set as the predetermined value. In addition, for example, $c_{init}$ of the reference signal sequence for data may be determined by an identifier indicated by the scheduling assignment.

In the embodiment of FIG. 19, a reference signal can be frequency-division multiplexed with data. In addition, for example, vertical frequency shift (v-shift) in D2D and V2X communication may be set to be different from the conventional V-shift. For example, when a frequency offset is high like V2X communication, a part of the conventional V-shift may be used. For example, in the embodiment of FIG. 19, the reference signal is mapped at an interval of six subcarriers in one symbol, and thus a total of six v-shifts can be theoretically applied. However, the V2X communication can be restricted to use only two v-shifts in consideration of the frequency offset.

In addition, the v-shift can be differently configured according to types of message to be transmitted. For example, the v-shift for a periodic message may be set different from that for an event-triggered message. Moreover, the v-shift can also be differently configured according to the sizes of messages. For example, even the same type of messages may have different v-shifts according to the size of each message.

Further, the v-shift may have a hopping pattern that varies depending on an OFDM symbol and/or subframe. The hopping pattern may be preconfigured or determined by an identifier included in the scheduling assignment. If a separate channel is not required like the scheduling assignment and discovery, the hopping pattern of the v-shift can be preconfigured. Alternatively, hopping may not be applied to the v-shift in the case of the scheduling assignment and/or discovery.

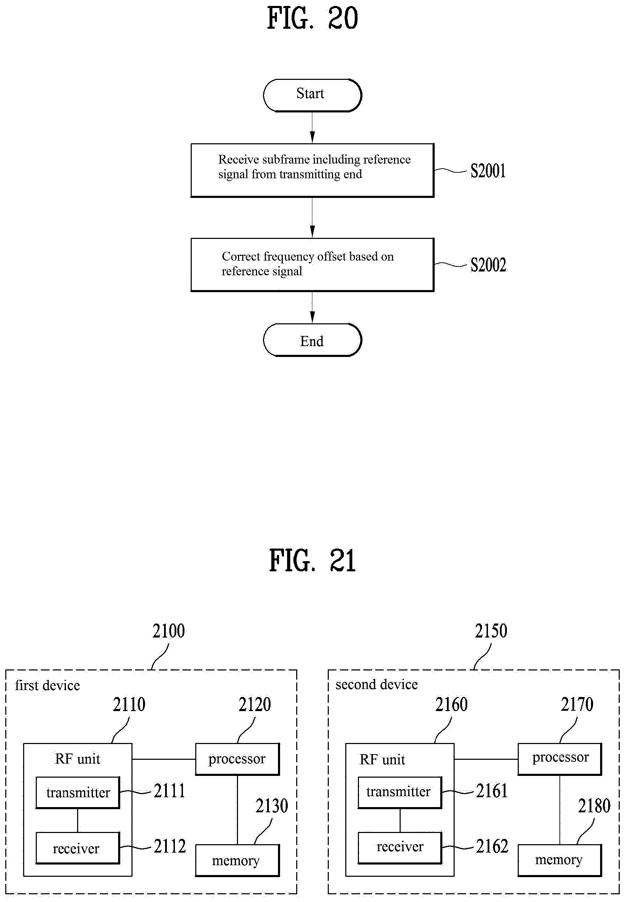

FIG. 20 is a flowchart illustrating a frequency offset correction method according to an embodiment of the present invention.

A UE can receive a subframe including a reference signal from a transmitting end [S2001]. In this case, the UE may be a UE that transmits and receives a signal in V2X communication. In addition, the UE may be a vehicle, a pedestrian, or another transportation units. As described above, the reference signal may correspond to a DMRS. It can be mapped as described above with reference to FIGs. 15a to 19. For example, the DMRS may be mapped to four symbols in one subframe. For example, the symbols where the DMRS is mapped may be equally spaced. In addition, the DMRS may be mapped in the form of a comb within one symbol. For instance, the DMRS may be mapped to resource elements with even or odd subframe indices. Information on the resources where the DMRS is mapped may be preconfigured or transmitted from the transmitting end to the receiving end.

The UE can correct a frequency offset based on the reference signal (S2002). Since signals are repeated in one symbol as described above, the UE can correct the frequency offset by comparing the repeated signals according to the reference signal. In addition, the UE can estimate the frequency offset by estimating a phase offset. Moreover, the UE can compare the repeated signals in the frequency domain by performing an FFT or half-FFT on the repeated signals.

Meanwhile, details such as a reference signal sequence are the same as described above with reference to FIGs. 3 to 5.

FIG. 21 schematically illustrates configuration of devices to which the embodiments of the present invention illustrated in FIGs. 1 to 20 may be applied according to an embodiment of the present invention.

In FIG. 21, each of a first device 2100 and a second device 2150, which are D2D UEs, includes a radio frequency (RF) unit 2110, 2160, a processor 2120, 2170, and, optionally, a memory 2130, 2180. Although FIG. 21 shows configuration of two D2D UEs, a plurality of D2D UEs may establish a D2D communication environment.

Each of the RF unit 2130 and 2160 may include a transmitter 2111, 2161 and a receiver 2112, 2162. The transmitter 2111 and the receiver 2112 of the first device 2100 may be configured to transmit and receive signals to and from the second device 2150 and other D2D UEs, and the processor 2120 may be functionally connected to the transmitter 2111 and the receiver 2112 to control the transmitter 2111 and the receiver 2112 to transmit and receive signals to and from other devices. Meanwhile, the first device 2100 and/or the second device 2150 may be an eNB.

The processor 2120 may perform various kinds of processing on a signal to be transmitted, and then transmit the signal to the transmitter 2111, and process a signal received by the receiver 2112. If necessary, the processor 2120 may store, in the memory 2130, information contained in an exchanged message.

With the above-described structure, the first device 2000 may perform the methods of the various embodiments of the present invention described above. For example, each signal and/or message may be transmitted and received using a transmitter and/or receiver of the RF unit, and each operation may be performed under control of the processor.

Meanwhile, although not shown in FIG. 21, the first device 2100 may include various additional elements according to device application type. For example, if the first device 2100 is for intelligent metering, the first device 2100 may include an additional element for power measurement and the like. The operation of power measurement may be under control of the processor 2120 or a separately configured processor (not shown).

For example, the second device 2150 may be an eNB. In this case, the transmitter 2161 and receiver 2162 of the eNB may be configured to transmit and receive signals to and from other eNBs, D2D servers, D2D devices, and the processor 2170 may be functionally connected to the transmitter 2161 and receiver 2162 and may be configured to control the process of the transmitter 2161 and the receiver 2162 transmitting and receiving signals to and from other devices. In addition, the processor 2170 may perform various kinds of processing on a signal to be transmitted, transmit the signal to the transmitter 2161, and process a signal received by the receiver 2162. If necessary, the processor 2170 may store, in the memory 2130, information contained in an exchanged message. With the above-described structure, the eNB 2150 may perform the methods of the various embodiments described above.

In FIG. 21, the processors 2120 and 2170 of the first device 2110 and the second device 2150 respectively instruct operations for the first device 2110 and the second device 2150 (for example, control, adjustment, management, etc.). Each of the processors 2120 and 2170 may be connected to the memory 2130, 2180 that stores program code and data. The memories 2130 and 2180 may be connected to the processors 2120 and 2170 to store operating systems, applications, and general files.

The processors 2120 and 2170 of the present invention may be referred to as a controller, a microcontroller, a microprocessor, a microcomputer, or the like. Meanwhile, the processors 2120 and 2170 may be implemented by hardware, firmware, software, or a combination thereof. When embodiments of the present invention are implemented using hardware, the processors 2120 and 2170 may include application specific integrated circuits (ASICs), digital signal processors (DSPs), digital signal processing devices (DSPDs), programmable logic devices (PLDs), or field programmable gate arrays (FPGAs).

When embodiments of the present invention are implemented using firmware or software, the firmware or software may be configured to include modules, procedures, or functions that perform the functions or operations of the present invention. The firmware or software configured to implement the present invention may be provided within the processor or may be stored in the memory and driven by the processor.

The embodiments described above are constructed by combining elements and features of the present invention in a predetermined form. Each element or feature should be understood as optional unless explicitly mentioned otherwise.

Each of the elements or features can be implemented without being combined with other elements. In addition, some elements and/or features may be combined to configure an embodiment of the present invention. The sequence of operations discussed in the embodiments of the present invention may be changed. Some elements or features of one embodiment may also be included in another embodiment, or may be replaced by corresponding elements or features of another embodiment.

**INDUSTRIAL APPLICABILITY**

The aforementioned embodiments of the present invention can be applied to various mobile communication systems.

**Claims**

1.   A method for correcting a frequency offset by a user equipment, UE, (2100) in vehicle-to-vehicle, V2V, communication, the method comprising:

>   receiving (S2001) a sub frame including a reference signal from a transmitting end; and
>   correcting (S2002) the frequency offset based on the reference signal,
>   wherein the reference signal is mapped to resource elements with either exclusively even or exclusively odd subcarrier indices in each of four symbols in the subframe,
>   wherein correcting the frequency offset comprises comparing repeated signals repeated at a time interval corresponding to the length of a first symbol among the four symbols,
>   wherein each of the repeated signals corresponds to the reference signal mapped to the first symbol,
>   wherein the reference signal comprises a demodulation reference signal, DMRS, and
>   wherein the first symbol is composed of twelve resource elements, each having a subcarrier index, wherein a first DMRS sequence with a length of 6 is used for mapping the reference signal to the first symbol, and wherein the first DMRS sequence is made up of part of a preconfigured second DMRS sequence with a length of 12.

2.   The method of claim 1, wherein the four symbols are equally spaced in the subframe.

3.   The method of claim 1, wherein comparing the repeated signals comprises comparing the repeated signals in a frequency domain by performing a Fast Fourier Transform, FFT, or a half-FFT on the repeated signals.

4.   The method of claim 1, wherein the corrected frequency offset is applied to the first symbol and symbols adjacent to the first symbol.

5.   A user equipment, UE, (2100) for correcting a frequency offset in vehicle-to-vehicle, V2V, communication, the UE (2100) comprising:

>   a transceiver (2110); and
>   a processor (2120) configured to control the transceiver (2110),
>   wherein the processor (2120) is further configured to:

>>   receive, from a transmitting end, a subframe including a reference signal which is mapped to resource elements with either exclusively even or exclusively odd subcarrier indices in each of four symbols in the subframe; and
>>   correct the frequency offset based on the reference signal by comparing repeated signals repeated at a time interval corresponding to the length of a first symbol among the four symbols, wherein each of the repeated signals corresponds to the reference signal mapped to the first symbol,
>>   wherein the reference signal comprises a demodulation reference signal, DMRS, and
>>   wherein the first symbol is composed of twelve resource elements, each having a subcarrier index, wherein a first DMRS sequence with a length of 6 is used for mapping the reference signal to the first symbol, and wherein the first DMRS sequence is made up of part of a preconfigured second DMRS sequence with a length of 12.

6.   The UE (2100) of claim 5, wherein the four symbols are equally spaced in the subframe.

7. The UE (2100) of claim 5, wherein the processor (2120) is further configured to compare the repeated signals in a frequency domain by performing a Fast Fourier Transform, FFT, or a half-FFT on the repeated signals.

8. The UE (2100) of claim 5, wherein the corrected frequency offset is applied to the first symbol and symbols adjacent to the first symbol.

**Patentansprüche**

1. Verfahren zur Korrektur eines Frequenzversatzes durch ein Benutzergerät, UE, (2100) in einer Fahrzeug-zu-Fahrzeug-, V2V-, Kommunikation, wobei das Verfahren aufweist:

Empfangen (S2001) eines Subrahmens einschließlich eines Referenzsignals von einem Übertragungsende; und Korrigieren (S2002) des Frequenzversatzes basierend auf dem Referenzsignal, wobei das Referenzsignal auf Ressourcenelemente mit entweder ausschließlich geraden oder ausschließlich ungeraden Subträger-Indizes in jedem von vier Symbolen in dem Subrahmen abgebildet wird, wobei die Korrektur des Frequenzversatzes das Vergleichen wiederholter Signale aufweist, die mit einem Zeitintervall wiederholt werden, das der Länge eines ersten Symbols von den vier Symbolen entspricht, wobei jedes der wiederholten Signale dem Referenzsignal entspricht, das auf das erste Symbol abgebildet wird, wobei das Referenzsignal ein Demodulationsreferenzsignal, DMRS, aufweist, und wobei das erste Symbol aus zwölf Ressourcenelementen zusammengesetzt ist, von denen jedes einen Subträgerindex hat, wobei eine erste DMRS-Sequenz mit einer Länge von 6 zum Abbilden des Referenzsignals auf das erste Symbol verwendet wird, und wobei die erste DMRS-Sequenz aus einem Teil einer vorkonfigurierten zweiten DMRS-Sequenz mit einer Länge von 12 zusammengesetzt ist.

2. Verfahren nach Anspruch 1, wobei die vier Symbole in dem Subrahmen gleichmäßig beabstandet sind.

3. Verfahren nach Anspruch 1, wobei das Vergleichen der wiederholten Signale das Vergleichen der wiederholten Signale in einer Frequenzdomäne ausführt, indem eine schnelle Fouriertransformation, FFT, oder eine halbe FFT für die wiederholten Signale durchgeführt wird.

4. Verfahren nach Anspruch 1, wobei der korrigierte Frequenzversatz auf das erste Symbol und Symbole benachbart zu dem ersten Symbol angewendet wird.

5. Benutzergerät, UE, (2100) zur Korrektur eines Frequenzversatzes in einer Fahrzeug-zu-Fahrzeug-, V2V-, Kommunikation, wobei das UE (2100) aufweist:

einen Transceiver (2110); und einen Prozessor (2120), der konfiguriert ist, um den Transceiver (2110) zu steuern, wobei der Prozessor (2120) ferner konfiguriert ist, um:

einen Subrahmen einschließlich eines Referenzsignals, das auf Ressourcenelemente mit entweder ausschließlich geraden oder ausschließlich ungeraden Subträger-Indizes in jedem von vier Symbolen in dem Subrahmen abgebildet wird, von einem Übertragungsende zu empfangen; und den Frequenzversatz basierend auf dem Referenzsignal zu korrigieren, indem wiederholte Signale, die mit einem Zeitintervall wiederholt werden, das der Länge eines ersten Symbols von den vier Symbolen entspricht, verglichen werden, wobei jedes der wiederholten Signale dem Referenzsignal entspricht, das auf das erste Symbol abgebildet wird, wobei das Referenzsignal ein Demodulationsreferenzsignal, DMRS, aufweist, und wobei das erste Symbol aus zwölf Ressourcenelementen zusammengesetzt ist, von denen jedes einen Subträgerindex hat, wobei eine erste DMRS-Sequenz mit einer Länge von 6 zum Abbilden des Referenzsignals auf das erste Symbol verwendet wird, und wobei die erste DMRS-Sequenz aus einem Teil einer vorkonfigurierten zweiten DMRS-Sequenz mit einer Länge von 12 zusammengesetzt ist.

6. UE (2100) nach Anspruch 5, wobei die vier Symbole in dem Subrahmen gleichmäßig beabstandet sind.

7. UE (2100) nach Anspruch 5, wobei der Prozessor (2120) ferner konfiguriert ist, um die wiederholten Signale in einer Frequenzdomäne zu vergleichen, indem eine schnelle Fouriertransformation, FFT, oder eine halbe FFT für die wiederholten Signale durchgeführt wird.

8. UE (2100) nach Anspruch 5, wobei der korrigierte Frequenzversatz auf das erste Symbol und Symbole benachbart zu dem ersten Symbol angewendet wird.


**Revendications**

1. Procédé pour la correction d'un décalage de fréquence par un équipement utilisateur, UE, (2100) dans une communication de véhicule à véhicule, V2V, le procédé comprenant :

   la réception (S2001) d'une sous-trame incluant un signal de référence à partir d'une extrémité d'émission ; et
   la correction (S2002) du décalage de fréquence sur la base du signal de référence,
   dans lequel le signal de référence est mappé à des éléments de ressource avec des indices de sous-porteuse soit exclusivement pairs soit exclusivement impairs dans chacun de quatre symboles dans la sous-trame,
   dans lequel la correction du décalage de fréquence comprend la comparaison de signaux répétés, répétés à un intervalle de temps correspondant à la longueur d'un premier symbole parmi les quatre symboles,
   dans lequel chacun des signaux répétés correspond au signal de référence mappé au premier symbole,
   dans lequel le signal de référence comprend un signal de référence de démodulation, DMRS, et
   dans lequel le premier symbole est composé de douze éléments de ressource, ayant chacun un indice de sous-porteuse, dans lequel une première séquence DMRS avec une longueur de 6 est utilisée pour mapper le signal de référence au premier symbole, et dans lequel la première séquence DMRS est constituée d'une partie d'une deuxième séquence DMRS préconfigurée avec une longueur de 12.

2. Procédé selon la revendication 1, dans lequel les quatre symboles sont espacés de manière égale dans la sous-trame.

3. Procédé selon la revendication 1, dans lequel la comparaison des signaux répétés comprend la comparaison des signaux répétés dans un domaine fréquentiel en effectuant une transformation de Fourier rapide, FFT, ou une demi-FFT sur les signaux répétés.

4. Procédé selon la revendication 1, dans lequel le décalage de fréquence corrigé est appliqué au premier symbole et à des symboles adjacents au premier symbole.

5. Equipement utilisateur, UE, (2100) pour la correction d'un décalage de fréquence dans une communication de véhicule à véhicule, V2V, l'UE (2100) comprenant :

   un émetteur-récepteur (2110) ; et
   un processeur (2120) configuré pour commander l'émetteur-récepteur (2110),
   dans lequel le processeur (2120) est configuré en outre pour :

      recevoir, à partir d'une extrémité d'émission, une sous-trame incluant un signal de référence qui est mappé à des éléments de ressource avec des indices de sous-porteuse soit exclusivement pairs soit exclusivement impairs dans chacun de quatre symboles dans la sous-trame ; et
      corriger le décalage de fréquence sur la base du signal de référence en comparant des signaux répétés, répétés à un intervalle de temps correspondant à la longueur d'un premier symbole parmi quatre symboles,
      dans lequel chacun des signaux répétés correspond au signal de référence mappé au premier symbole,
      dans lequel le signal de référence comprend un signal de référence de démodulation, DMRS, et
      dans lequel le premier symbole est composé de douze éléments de ressource, ayant chacun un indice de sous-porteuse, dans lequel une première séquence DMRS avec une longueur de 6 est utilisée pour mapper le signal de référence au premier symbole, et dans lequel la première séquence DMRS est constituée d'une partie d'une deuxième séquence DMRS préconfigurée avec une longueur de 12.

6. UE (2100) selon la revendication 5, dans lequel les quatre symboles sont espacés de manière égale dans la sous-trame.

7. UE (2100) selon la revendication 5, dans lequel le processeur (2120) est configuré en outre pour comparer les signaux répétés dans un domaine fréquentiel en effectuant une transformation de Fourier rapide, FFT, ou une demi-FFT sur les signaux répétés.

8. UE (2100) selon la revendication 5, dans lequel le décalage de fréquence corrigé est appliqué au premier symbole et à des symboles adjacents au premier symbole.

# FIG. 1

MME

S-GW

EPC

S1-MME

cNB

S1-U

X2

Uu

E-UTRAN

UE

UE

UE

# FIG. 2

| | | |
|---|---|---|
| RRC | ⟷ | RRC |
| PDCP | ⟷ | PDCP |
| RLC | ⟷ | RLC |
| MAC | ⟷ | MAC |
| PHY | ⟷ | PHY |
| UE | | E-UTRAN |

# FIG. 3

| | | |
|---|---|---|
| RDCP | ⟷ | RDCP |
| RLC | ⟷ | RLC |
| MAC | ⟷ | MAC |
| PHY | ⟷ | PHY |
| UE | | E-UTRAN |

# FIG. 4

RADIO FRAME, $T_f = 307200T_s = 10ms$

SLOT, $T_{slot} = 15360T_s = 0.5ms$

| #0 | #1 | #2 | #3 | · · · | #18 | #19 |

SUBFRAME

# FIG. 5

One radio frame,$T_s$=307200T = 10ms

One half-frame,$T_s$=153600T = 5ms

One slot
$T_{slot}$=15360$T_s$

30720$T_s$

| Subframe #0 | | | | Subframe #2 | Subframe #3 | Subframe #4 | Subframe #5 | | | | Subframe #7 | Subframe #8 | Subframe #9 |

One subframe,
30720$T_s$

DwPTS  GP  UpPTS

DwPTS  GP  UpPTS

# FIG. 6

One downlink slot

7 OFDM symbols

$N^{DL} \times 12$ subcarriers

12 subcarriers

Resource block
12×7 resource elements

Resource elements

# FIG. 7

Control region          Data region

First slot          Second slot

One subframe

Frequency

Time

# FIG. 8

FIG. 9

# FIG. 10

Frequency

| Unit #($N_F$-1) | Unit #(2$N_F$-1) | | Unit #($N_F$+$N_T$-1) | Unit #($N_F$-1) |
|---|---|---|---|---|

... ...

| Unit #1 | Unit #($N_F$+1) | · · · | Unit #($N_F$+$N_T$-$N_F$+1) | Unit #1 |
|---|---|---|---|---|
| Unit #0 | Unit #$N_F$ | | Unit #($N_F$+$N_T$-$N_F$) | Unit #0 |

D2D signal
transmission from a UE
allocated with unit #0

# FIG. 11

# FIG. 12

# FIG. 13

CONTROL REGION        DATA REGION

FREQUENCY

TIME

⬚ (hatched) CRS

⬚ (dotted) DM RS (CDM group 1)

⬚ (hatched) DM RS (CDM group 2)

# FIG. 14

(a)

(b)

(c)

(d)

(e)

CRS

CSI-RS (CDM group 1)

CSI-RS (CDM group 2)

CSI-RS (CDM group 3)

CSI-RS (CDM group 4)

# FIG. 15A

# FIG. 15B

# FIG. 16

# FIG. 17

# FIG. 18

# FIG. 19

# FIG. 20

Start

Receive subframe including reference signal from transmitting end — S2001

Correct frequency offset based on reference signal — S2002

End

# FIG. 21

2100

first device

2110    2120

RF unit    processor

transmitter — 2111

2130

receiver — 2112    memory

2150

second device

2160    2170

RF unit    processor

transmitter — 2161

2180

receiver — 2162    memory

**REFERENCES CITED IN THE DESCRIPTION**

**Patent documents cited in the description**

- US 2013114756 A1